# EUROPÄISCHE PATENTANMELDUNG

(11) **EP 4 524 664 A1**
(43) Veröffentlichungstag der Anmeldung: **19.03.2025**
(21) Anmeldenummer: 24199468.0
(22) Anmeldetag: 10.09.2024
(51) Int. Cl.: G05B 19/4093, G05B 19/4097

(54) **VERFAHREN UND VORRICHTUNG ZUM WERKZEUGDATENAUSTAUSCH**

(30) Priorität: 14.09.2023 DE 102023124850
(71) Anmelder: DMG MORI Digital GmbH, 33689 Bielefeld (DE)
(72) Erfinder: SHANIB, Maruan, 30167 Hannover (DE); DAMM, Jens, 33659 Bielefeld (DE)
(74) Vertreter: MERH-IP Matias Erny Reichl Hoffmann Patentanwälte PartG mbB

(57) **Zusammenfassung**

Die vorliegende Erfindung betrifft ein Verfahren zur Verarbeitung von Werkzeugdaten an einer Werkzeugmaschine mit einer Datenschnittstelle zur Verbindung mit einem Werkzeugmanagementsystem und dazugehöriger Steuerungsvorrichtung und Computerprogrammprodukt. Das Verfahren umfasst die Schritte: Erfassen einer eindeutigen Werkzeugkennung, WID, eines aufzunehmenden Werkzeugs; Abgleichen der erfassten WID mit vorbekannten Werkzeugidentifikationsdaten der Werkzeugmaschine; wenn festgestellt wird, dass das aufzunehmende Werkzeug noch nicht bekannt ist und/oder aktualisierte Werkzeugdaten zu der WID verfügbar sind: über die Datenschnittstelle, automatisiertes Abrufen von Werkzeugdaten direkt vom Werkzeugmanagementsystem, basierend auf der erfassten WID oder automatisiertes Abrufen der Werkzeugdaten direkt vom aufzunehmenden Werkzeug; Festlegen eines Beladeplatzes für das aufzunehmende Werkzeug basierend auf den abgerufenen Werkzeugdaten und bevorzugt, Aufnahme des Werkzeugs am festgelegten Beladeplatz.

## Beschreibung

Die vorliegende Erfindung betrifft ein Verfahren zur Verarbeitung von Werkzeugdaten an einer Werkzeugmaschine mit einer Datenschnittstelle zur Verbindung mit einem Werkzeugmanagementsystem und dazugehöriger Steuerungsvorrichtung und Computerprogrammprodukt.

### Hintergrund

Im Stand der Technik ist es bekannt, die Werkstückbearbeitung an numerisch gesteuerten Werkzeugmaschinen mittels einer NC-Steuereinrichtung zu steuern, die zumeist an der Werkzeugmaschine integriert ist. Insbesondere steuert die NC-Steuereinrichtung steuerbare Aktoren, z.B. Spindelantriebe, Achsantriebe von Achsen der Werkzeugmaschine und weitere Maschinenfunktionen der Werkzeugmaschine, z.B. auf Basis eines durch ein CAD/CAM-System generierten oder eines Maschinenbedieners programmierten NC-Programms.

In der DE 10 2006 043 390 A1 wird eine Vorrichtung und ein Verfahren zur Simulation eines Ablaufs zur Bearbeitung eines Werkstücks an einer Werkzeugmaschine beschrieben. Der beschriebene Ansatz zeichnet sich durch einen ganzheitlichen Simulationsansatz aus. Insbesondere werden die PLC-Bewegungsabläufe der Werkzeugmaschine mit Hilfe einer PLC-Steuereinrichtung und einer PLC-Ablaufsimulationseinrichtung mit simuliert. Dadurch ist eine realistische Simulation einer Werkzeugmaschine in all ihren wesentlichen Aspekten möglich.

In der EP 2 891 020 A1 wurde eine erweiterte Steuerung einer numerisch gesteuerten Werkzeugmaschine vorgeschlagen, bei der übergeordnet zu der NC-Steuereinrichtung eine weitere Steuerungseinrichtung bzw. Bedieneinrichtung vorgesehen ist, die die Bedienung bzw. Steuerung des Bedieners der Werkzeugmaschine gegenüber den Funktionen einer NC-Steuereinrichtung erweitert.

Werkzeug- und Werkzeugdatenmanagement im Bereich der Werkzeugmaschinen stellen aktuell eine sehr große Herausforderung dar und insbesondere gibt es aktuell verschiedenste Wege wie Werkzeuge mit entsprechenden Daten auf die Maschine kommen. Werkzeugmaschinenseitig ist es dazu insbesondere notwendig, dass die Werkzeugdaten eingegeben werden um in der Steuerung verwendet werden zu können und daher ist ein bestimmtes Datenformat erforderlich. Weiterhin sind aktuelle Voreinstellgeräte meist darauf ausgelegt über eine herstellerspezifische Nutzeroberfläche von einem menschlichen Bediener bedient zu werden. Die genauen Bedienschritte, die Bezeichnungen und die Darstellung der Daten unterscheiden sich dabei von Hersteller zu Hersteller. Entsprechende APIs stehen dabei nicht zur Verfügung. Aufgrund dieser Hürden stellt die Automatisierung bei der Werkzeugmaschinensteuerung insbesondere auch in Bezug auf die Verarbeitung der Werkzeugdaten ein zentrales Problem dar. Möglichst präzise Werkzeugdaten sind jedoch für moderne Herstellungsprozesse unerlässlich um einen effizienten und effektiven Einsatz der Werkzeuge und Werkzeugmaschine zu ermöglichen.

Es ist somit eine Aufgabe der vorliegenden Erfindung, ein System, eine Vorrichtung bzw. ein Verfahren bereitzustellen, mit dem die Bedienung bzw. Steuerung einer Werkzeugmaschine erweitert und verbessert wird, insbesondere hinsichtlich der Bedienbarkeit der Werkzeugmaschine hinsichtlich Automatisierung, um eine effiziente Herstellung von Werkstücken durch die Werkzeugmaschine zu erreichen.

### Zusammenfassung

Zur Lösung der vorstehend beschriebenen Aufgabe werden ein Verfahren zur Verarbeitung von Werkzeugdaten an einer Werkzeugmaschine gemäß Anspruch 1 sowie Systeme, Vorrichtungen bzw. Verfahren gemäß der unabhängigen Ansprüchen vorgeschlagen. Abhängige Ansprüche betreffen bevorzugte bzw. besonders zweckdienliche Ausführungsbeispiele.

Gemäß einer bevorzugten Ausführungsform wird vorgeschlagen: Verfahren zur Verarbeitung von Werkzeugdaten an einer Werkzeugmaschine (insbesondere an der Steuereinrichtung der Werkzeugmaschine) mit einer Datenschnittstelle zur Verbindung mit einem Werkzeugmanagementsystem. Zu den Verfahrensschritten zählen insbesondere: Das Erfassen einer eindeutigen Werkzeugkennung, im Folgenden als "WID" bezeichnet, eines aufzunehmenden Werkzeugs, und anschließend das Abgleichen der erfassten WID mit vorbekannten Werkzeugidentifikationsdaten der Werkzeugmaschine. Wenn festgestellt wird, dass das aufzunehmende Werkzeug noch nicht bekannt ist und/oder aktualisierte Werkzeugdaten zu der WID verfügbar sind, dann werden zunächst über die Datenschnittstelle Werkzeugdaten, basierend auf der erfassten WID, direkt (und bevorzugt unmittelbar) vom Werkzeugmanagementsystem automatisiert abgerufen. Bevorzugt ist dazu also kein manueller Eingriff mehr nötig. Alternativ werden die Werkzeugdaten direkt (und bevorzugt unmittelbar) vom aufzunehmenden Werkzeug automatisiert abgerufen. Die Werkzeugdaten sind daher direkt in der WZM-Steuerung bspw. NC-Steuereinrichtung verfügbar. Im nächsten Schritt wird ein Beladeplatz für das aufzunehmende Werkzeug, basierend auf den abgerufenen Werkzeugdaten festgelegt, und bevorzugt wird das Werkzeug auch am festgelegten Beladeplatz aufgenommen. Durch diese Ausgestaltung ist eine automatisierte und effiziente Erfassung der nötigen (und aktuellen) Werkzeuge mit Werkzeugdaten möglich welche direkt im Produktionsprozess verwendet werden könne um somit die Effizienz bei der Verwendung der Werkzeugmaschine und insbesondere bei der Herstellung von Werkstücken deutlich zu verbessern. Zudem werden Fehler und Wartezeiten bei der Werkzeugerfassung/Eingabe reduziert oder ganz vermieden.

In bevorzugten Ausführungsbeispielen umfasst das Erfassen der WID auch das Scannen einer Werkzeugidentifikationskennung des aufzunehmenden Werkzeugs. Die WID kann dabei eine eindeutige Identifikation sein (bspw. UUID - Universally Unique Identifier) welche das bestimmte Werkzeug global eindeutig identifiziert und somit eine sichere und schneller Erfassung des Werkzeugs ermöglicht.

In bevorzugten Ausführungsbeispielen ist das Werkzeugmanagementsystem ein externes Werkzeugmanagementsystem zum Bereitstellen von Daten bspw. aus der Cloud, und die Datenschnittstelle ist eine Werkzeugdatenschnittstelle, die über eine Netzwerkverbindung mit dem externen Werkzeugmanagementsystem in Verbindung steht. Bevorzugt bezieht sich hierbei der Begriff "extern" auf die Werkzeugmaschine, sodass ein externes Datenmanagementsystem ein System ist, welches extern und bevorzugt unabhängig zur einzelnen Werkzeugmaschine bereitgestellt wird. Ein Werkzeugmanagementsystem kann insbesondere ein System der Betriebsmittelverwaltung sein mit dem einige oder sämtliche verfügbare Werkzeuge Stammdaten (beispielsweise als Teil der Werkzeugdaten) umfassen sowie eine aktuelle Dokumentation über Werkzeugdaten, Wartungsstand und die Einsatzbereitschaft der Werkzeuge (jederzeit konkrete Aussagen über die Werkzeugverfügbarkeit). Zudem können die Werkzeugdaten des Werkzeugmanagementsystem eine Werkzeughistorie umfassen. Die Werkzeughistorie kann von der Planung über die Einführung des Werkzeugs bis hin zu den eigentlichen Arbeitszeiträumen, in denen das Werkzeug im Einsatz war, sämtliche Ereignisse angeben. Durch die automatisierte Bereitstellung dieser umfassenden Werkzeugdaten mittels WID, ist somit in effizienter und präziser Einsatz der Werkzeugmaschine ermöglicht. Eine Bereitstellung der Daten über das externe Werkzeugmanagementsystem bietet die Möglichkeit einer dezentralen und flexiblen Bereitstellung der Daten für verschiedene Werkzeugmaschinen.

In bevorzugten Ausführungsbeispielen umfassen die Werkzeugdaten Messwerte und/oder Einstellwerte des Werkzeugs, welche an einer externen Vorrichtung, insbesondere einem Voreinstell-, Wucht- oder Schrumpfgerät bestimmt wurden. Diese speziellen Daten sind insbesondere für den noch präziseren Einsatz des Werkzeugs an der Werkzeugmaschine vorteilhaft wobei die individuelle Bereitstellung der Daten über den automatisierten Datenabruf den besonderen Vorteil hat, dass aktuellste Messwerte und/oder Einstellwerte des tatsächlich einzuwechselnden Werkzeugs automatisch an der Werkzeugmaschine verfügbar sind und der Produktionsablauf effizient und präzise gestaltet werden kann.

In bevorzugten Ausführungsbeispielen werden zur Erstellung einer Differenzliste die für einen Bearbeitungsauftrag benötigten Werkzeuge mit den bereits vorhandenen Werkzeugen verglichen, und es können ein oder mehrere einzuwechselnde Werkzeuge anhand der Differenzliste bestimmt werden. In dieser fortgeschrittenen Ausführung, werden nicht nur die spezifischen Werkzeugdaten automatisch abgerufen, sondern es wird zudem auch automatisiert für den speziellen Produktionsauftrag oder Bearbeitungsauftrag ermittelt, welche Werkzeuge benötigt werden. Der Bearbeitungsauftrag kann dabei insbesondere ein CNC oder NC Programm zur Herstellung eines oder mehrerer Bauteile sein.

In bevorzugten Ausführungsbeispielen wird ein NC-Programm nach benötigten Werkzeugen gescannt, und bevorzugt wird eine entsprechende Differenzliste erstellt. In dieser fortgeschrittenen Ausführung, werden nicht nur die spezifischen Werkzeugdaten automatisch abgerufen, sondern es wird zudem auch automatisiert für den speziellen Produktionsauftrag oder Bearbeitungsauftrag ermittelt, welche Werkzeuge benötigt werden. Der Bearbeitungsauftrag kann dabei insbesondere ein CNC oder NC Programm zur Herstellung eines oder mehrerer Bauteile sein.

In bevorzugten Ausführungsbeispielen wird ein vorbestimmter Rüstplatz für das einzuwechselnde Werkzeug festgelegt. In dieser fortgeschrittenen Ausführung, werden nicht nur die spezifischen Werkzeugdaten automatisch abgerufen, sondern es wird zudem auch automatisiert ein optimaler Rüstplatz für das einzuwechselnde Werkzeug (welches zur Abarbeitung des speziellen Produktionsauftrags oder Bearbeitungsauftrags noch nötig ist und noch an der Werkzeugmaschine bzw. Werkzeugmagazin einzuwechseln ist) ermittelt.

In bevorzugten Ausführungsbeispielen wird zudem in Abhängigkeit eines Bearbeitungsauftrags eine Rüstreihenfolge der Werkzeuge festlegt, sodass die Beladeplätze der Werkzeuge entsprechend dem Bearbeitungsauftrag festgelegt werden. In dieser fortgeschrittenen Ausführung, werden nicht nur die spezifischen Werkzeugdaten automatisch abgerufen, sondern es wird zudem auch automatisiert ein optimaler Rüstplatz für alle benötigten Werkzeuge ermittelt werden.

In bevorzugten Ausführungsbeispielen sind die vorbekannten Werkzeugidentifikationsdaten auf einem Speicher an der Werkzeugmaschine gespeichert, insbesondere einem internen Speicher der Werkzeugmaschine oder der Werkzeugmaschinensteuerung. Ein schnelles Abrufen der Daten im Produktionsprozess wird somit ermöglicht und der Produktionsablauf kann effizient und präzise gestaltet werden.

In bevorzugten Ausführungsbeispielen sind die WID und/oder Werkzeugdaten direkt am Werkzeug oder Werkzeughalter maschinenlesbar angebracht, um durch Scannen abgerufen zu werden. Ein schnelles Abrufen der Daten im Produktionsprozess wird somit ermöglicht und der Produktionsablauf kann effizient und präzise gestaltet werden.

In bevorzugten Ausführungsbeispielen werden die Werkzeugdaten auf zumindest einer der folgenden Arten hinterlegt:
- die Werkzeugdaten und/oder die WID werden in einer Datenbank abgespeichert;
- die Werkzeugdaten und/oder die WID werden permanent auf dem Werkzeug angebracht, insbesondere als gravierter oder gedruckter 2D-Code;
- die Werkzeugdaten und/oder die WID werden temporär auf dem Werkzeug hinterlegt, insbesondere als bedruckter Aufkleber; und/oder
- die Werkzeugdaten und/oder die WID werden auf einem dem Werkzeug zugeordneten Datenträger, insbesondere einem RFID-Chip, abgespeichert.

Ein schnelles Abrufen der Daten im Produktionsprozess wird somit ermöglicht und der Produktionsablauf kann effizient und präzise gestaltet werden.

In bevorzugten Ausführungsbeispielen ist der 2D-Code eine Data-Matrix-Code-Kodierung oder eine QR-Code-Kodierung.

In bevorzugten Ausführungsbeispielen werden die Werkzeugdaten über eine direkte Datenverbindung abgerufen, sodass diese direkt in die Werkzeugmaschine gelangen und dort zur Weiterverarbeitung direkt verfügbar sind, wobei bevorzugt die Werkzeugdaten nach dem Abrufen werkzeugmaschinenseitig gespeichert werden und bei der Abarbeitung eines Bearbeitungsauftrags verwendet werden. Ein sehr schnelles und sicheres Abrufen der Daten im Produktionsprozess wird somit ermöglicht und der Produktionsablauf kann effizient und präzise gestaltet werden.

In bevorzugten Ausführungsbeispielen ist die Datenschnittstelle eine Werkzeugdatenschnittstelle, welche der UPC UA, Open Platform Communications Unified Architecture, entspricht und die Schnittstelle umfasst einen OPC UA Server. Somit ist ein besonders flexibler Einsatz und ein effizienter Datenabruf ermöglicht.

In bevorzugten Ausführungsbeispielen wird zur Kommunikation mit dem Werkzeugmanagementsystem, und insbesondere zum Abrufen der Werkzeugdaten, die UPC UA verwendet. Somit ist ein besonders flexibler Einsatz und ein effizienter Datenabruf ermöglicht.

In bevorzugten Ausführungsbeispielen werden über einen OPC UA Client die Werkzeugdaten als OPC UA Serviceaufruf von einem OPC UA Server abgerufen. Somit ist ein besonders flexibler Einsatz und ein effizienter Datenabruf ermöglicht.

In bevorzugten Ausführungsbeispielen werden die Werkzeugdaten nach dem Abrufen in ein Eingabeformat (vereinheitlichendes Eingabeformat) konvertiert, welches abhängig von der verwendeten Werkzeugmaschinensteuerung vorgegeben ist. Somit ist ein besonders flexibler Einsatz und ein effizienter Datenabruf ermöglicht.

In weiteren vorteilhaften Aspekten werden vorgeschlagen:
Ein Computerprogrammprodukt, umfassend Befehle, die bei der Ausführung des Programms durch eine Steuerungseinrichtung einer numerisch gesteuerten Werkzeugmaschine diese veranlassen das Verfahren gemäß zumindest einer der vorherigen Merkmale auszuführen.

Steuerungsvorrichtung für eine Werkzeugmaschine mit einer Datenschnittstelle zur Verbindung mit einem Werkzeugmanagementsystem und mit einem anwendungsbasierten Steuerungssystem. Die Steuerungsvorrichtung kann konfiguriert sein zum: Erfassen einer eindeutigen Werkzeugkennung, im Folgenden als "WID" bezeichnet, eines aufzunehmenden Werkzeugs, und anschließendem Abgleichen der erfassten WID mit vorbekannten Werkzeugidentifikationsdaten der Werkzeugmaschine. Wenn festgestellt wird, dass das aufzunehmende Werkzeug noch nicht bekannt ist und/oder aktualisierte Werkzeugdaten zu der WID verfügbar sind, dann werden zunächst über die Datenschnittstelle Werkzeugdaten, basierend auf der erfassten WID, direkt vom Werkzeugmanagementsystem automatisiert abgerufen. Alternativ werden die Werkzeugdaten direkt vom aufzunehmenden Werkzeug automatisiert abgerufen. Im nächsten Schritt wird ein Beladeplatz für das aufzunehmende Werkzeug, basierend auf den abgerufenen Werkzeugdaten festgelegt, und bevorzugt wird das Werkzeug auch am festgelegten Beladeplatz aufgenommen.

Die Datenschnittstelle der Steuerungsvorrichtung ist eine Werkzeugdatenschnittstelle, welche der UPC UA, Open Platform Communications Unified Architecture, entspricht, wobei die Schnittstelle einen OPC UA Server umfasst.

Werkzeug- und Werkzeugdatenmanagement im Bereich der Werkzeugmaschinen stellen aktuell eine sehr große Herausforderung dar und insbesondere gibt es aktuell verschiedenste Wege wie Werkzeuge mit Daten auf die Maschine kommen. Werkzeugmaschinenseitig ist es dazu insbesondere notwendig, dass die Werkzeugdaten eingegeben werden und in der Steuerung verwendet werden können und daher ein bestimmtes Datenformat vorliegt. Dazu sind verschiedene Datenformate relevant, wie bspw. CNC oder PLC.

Die Werkzeughersteller stellen neben den eigentlichen Werkzeugen auch Voreinstellgeräte und Werkzeugsteuerungen zur Verfügung, mit denen Soll-Werte, Toleranzbereiche und Ist-Werte für die jeweiligen Werkzeuge festgestellt bzw. ausgeben werden können. Dabei sind diese Voreinstellgeräte darauf ausgelegt über eine Hersteller-spezifische Nutzeroberfläche von einem menschlichen Bediener bedient zu werden. Die genauen Bedienschritte, die Bezeichnungen und die Darstellung der Daten unterscheiden sich dabei von Hersteller zu Hersteller. Entsprechende APIs stehen dabei nicht zur Verfügung, lediglich das generische OPC UA-Protokoll wird für eine Computer-implementierte Ansteuerung unterstützt. Das OPC UA-Protokoll basiert auf hardware-nahen Low-Level Befehlen, sodass eine Ansteuerung über dieses Protokoll in der Praxis eine komplexe Aufgabe darstellt, welche sich aktuell nicht einfach lösen lässt. Dies gilt insbesondere, wenn Geräte von fremden Herstellern mit proprietärer Hardware angesteuert werden. Ein besonders vorteilhafter Aspekt ist vorliegend daher das vereinheitlichende Eingabeformat welches eine Lösung der oben genannten Probleme bezüglich der Daten- und Formatkonvertierungen darstellt.

Gemäß einer weiteren bevorzugten Ausführungsform nach zumindest einem der beschriebenen Merkmale wird zudem vorgeschlagen: Eine Bedienvorrichtung zum Einsatz an einer numerisch gesteuerten Werkzeugmaschine, mit einer Datenverarbeitungseinrichtung, die insbesondere dazu eingerichtet ist, Steuer- und Bedienanwendungen auszuführen, einer Steuerungsschnittstelle, über die die Datenverarbeitungseinrichtung mit einer Steuereinrichtung der Werkzeugmaschine kommunikativ verbindbar ist, und/oder einer Benutzerschnittstelle, die dazu eingerichtet ist, Eingabeinformationen gemäß Bedieneingaben eines Bedieners der Werkzeugmaschine anzunehmen und an die Datenverarbeitungseinrichtung zu übermitteln und/oder von der Datenverarbeitungseinrichtung übermittelte Ausgabeinformationen an den Bediener auszugeben. Wenn festgestellt wird, dass das aufzunehmende Werkzeug noch nicht bekannt ist und/oder aktualisierte Werkzeugdaten zu der WID verfügbar sind, dann werden zunächst über die Datenschnittstelle Werkzeugdaten, basierend auf der erfassten WID, direkt (und bevorzugt unmittelbar) vom Werkzeugmanagementsystem automatisiert abgerufen. Bevorzugt ist dazu also kein manueller Eingriff (durch den Bediener) mehr nötig. Alternativ werden die Werkzeugdaten direkt (und bevorzugt unmittelbar) vom aufzunehmenden Werkzeug automatisiert abgerufen. Im nächsten Schritt wird ein Beladeplatz für das aufzunehmende Werkzeug, basierend auf den abgerufenen Werkzeugdaten festgelegt, und bevorzugt wird das Werkzeug auch am festgelegten Beladeplatz aufgenommen. Durch diese Ausgestaltung ist eine automatisierte und effiziente Erfassung der nötigen (und aktuellen) Werkzeuge mit Werkzeugdaten möglich welche direkt im Produktionsprozess verwendet werden könne um somit die Effizienz bei der Verwendung der Werkzeugmaschine und insbesondere bei der Herstellung von Werkstücken deutlich zu verbessern. Zudem werden Fehler und Wartezeiten bei der Werkzeugerfassung/Eingabe reduziert oder ganz vermieden.

In bevorzugten Ausführungsbeispielen ist die Datenverarbeitungseinrichtung dazu eingerichtet, einen Bearbeitungsauftrag zur Bearbeitung eines oder mehrerer Werkstücke an der Werkzeugmaschine auf Grundlage einer Bearbeitungsschrittsequenz, insbesondere einer von dem Bediener über die Benutzerschnittstelle anwählbaren Bearbeitungsschrittsequenz, zu steuern und/oder entsprechende Maschinen- bzw. Steuerfunktionen über die Steuerungsschnittstelle an der Steuereinrichtung aufzurufen. In Abhängigkeit des Bearbeitungsauftrags wird eine Rüstreihenfolge der Werkzeuge festlegt, sodass die Beladeplätze der Werkzeuge entsprechend dem Bearbeitungsauftrag festgelegt werden. In dieser Ausführung, werden nicht nur die spezifischen Werkzeugdaten automatisch abgerufen, sondern es wird zudem auch automatisiert ein optimaler Rüstplatz für alle benötigten Werkzeuge ermittelt werden.

In bevorzugten Ausführungsbeispielen ist die Datenverarbeitungseinrichtung dazu eingerichtet, den Bearbeitungsauftrag auf Grundlage von in einer Datenspeichervorrichtung der Bedieneinrichtung gespeicherten Bearbeitungsschrittsequenzdaten die der Bearbeitungsschrittsequenz zugeordnet sind, zu steuern.

In bevorzugten Ausführungsbeispielen geben die Bearbeitungsschrittsequenzdaten eine Mehrzahl von Bearbeitungsschritten und/oder eine vorgegebene Reihenfolge der Mehrzahl von Bearbeitungsschritten an bzw. vor.

In bevorzugten Ausführungsbeispielen umfasst die Mehrzahl von Bearbeitungsschritten zumindest einen oder mehrere aus:
- einen der Bearbeitungsschrittsequenz zugeordneten Bearbeitungsauftrag annehmen,
- ein oder mehrere für den Bearbeitungsauftrag erforderliche Spannmittel an der Werkzeugmaschine rüsten bzw. vorbereiten,
- ein oder mehrere für den Bearbeitungsauftrag erforderliche Werkzeuge an der Werkzeugmaschine einrichten,
- ein oder mehrere für den Bearbeitungsauftrag erforderliche Werkzeuge an der Werkzeugmaschine laden bzw. vorbereiten,
- ein oder mehrere für den Bearbeitungsauftrag erforderliche NC-Codes, NC-Programme und/oder NC-Programmabschnitte laden und/oder programmieren,
- ein oder mehrere für den Bearbeitungsauftrag erforderliche NC-Codes, NC-Programme und/oder NC-Programmabschnitte ausführen,
- eine Prozessüberwachungsanwendung ausführen,
- einen oder mehrere dem Bearbeitungsauftrag zugeordnete Bearbeitungsprozesse dokumentieren,
- eine automatisierte Qualitätsprüfung eines oder mehrerer bearbeiteter Werkstücke durchführen, und /oder
- Abgeben des Bearbeitungsauftrags.

In bevorzugten Ausführungsbeispielen umfasst die Mehrzahl von Bearbeitungsschritten zumindest einen oder mehrere umfasst:
- automatisches Zusammenstellen von Werkstückpaletten,
- automatisiertes Beladen von Werkstückpaletten,
- automatisches Umsortieren von Werkstücken auf Werkstückpaletten,
- Einstellen einer Spannlage eines Werkstücks,
- Wechseln von einer Spannlage auf eine andere Spannlage,
- automatisches Vermessen von Werkstücken,
- automatisches Beladen eines Werkzeugmagazins der Werkzeugmaschine,
- automatisiertes Einrichten von Werkzeugen an der Werkzeugmaschine,
- automatisches Umsortieren von Werkzeugen am Werkzeugmagazin, und/oder
- Durchführen einer oder mehrerer Reinigungs- Wartungs-, Instandhaltungs- und/oder Serviceanwendungen an der Werkzeugmaschine.

In bevorzugten Ausführungsbeispielen geben die Bearbeitungsschrittsequenzdaten für jeden Bearbeitungsschritt der Bearbeitungsschrittsequenz eine zugeordnete Bearbeitungsschrittanwendung an. Bevorzugt ist die Datenverarbeitungseinrichtung dazu eingerichtet, zum Steuern eines Bearbeitungsschritts die jeweils zugeordnete Bearbeitungsschrittanwendung auszuführen.

In bevorzugten Ausführungsbeispielen umfasst die Bedieneinrichtung weiterhin eine Netzwerkschnittstelle, die dazu eingerichtet ist, die Bedienvorrichtung über ein Kommunikationsnetzwerk mit einem oder mehreren Servern zu verbinden.

In bevorzugten Ausführungsbeispielen ist die Datenverarbeitungseinrichtung dazu eingerichtet, wenn zumindest einer der Server das Ausführen von Bearbeitungsschrittanwendung als Webanwendungen gemäß einer Client-Server-Kommunikation bereitstellt, zum Steuern eines Bearbeitungsschritts die zugeordnete Bearbeitungsschrittanwendung als Webanwendung gemäß der Client-Server-Kommunikation mit dem zumindest einen Server über die Netzwerkschnittstelle auszuführen. Dieser kann zudem in Abhängigkeit eines Bearbeitungsauftrags eine Rüstreihenfolge der Werkzeuge festlegen, sodass die Beladeplätze der Werkzeuge entsprechend dem Bearbeitungsauftrag festgelegt werden. In dieser Ausführung, werden nicht nur die spezifischen Werkzeugdaten automatisch abgerufen, sondern es wird zudem auch automatisiert ein optimaler Rüstplatz für alle benötigten Werkzeuge ermittelt werden.

In bevorzugten Ausführungsbeispielen ist die Datenverarbeitungseinrichtung dazu eingerichtet, zum Ausführen einer einem Bearbeitungsschritt der Bearbeitungsschrittsequenz zugeordneten Bearbeitungsschrittanwendung erforderliche Eingabeinformationen und/oder der benötigten Werkzeugdaten, diese automatisch vom externen Werkzeugmanagementsystem abzurufen.

Bevorzugt ist die Datenverarbeitungseinrichtung dazu eingerichtet, zum Ausführen einer einem Bearbeitungsschritt der Bearbeitungsschrittsequenz zugeordneten Bearbeitungsschrittanwendung erforderliche Eingabedaten und/oder Werkzeugdaten automatisch über die Netzwerkschnittstelle von einem oder mehreren Servern einzuholen bzw. zu laden.

Bevorzugt umfassen die Eingabedaten eines oder mehrere aus:
- Modelldaten, die ein CAD-Modell eines oder mehrerer Werkstücke, eines oder mehrerer Werkstückteile und/oder eines oder mehrerer Werkzeuge angeben,
- NC-Daten, die einen oder mehrere NC-Codes, ein oder mehrere NC-Programme und/oder einen oder mehrere NC-Programmabschnitte angeben,
- Auftragsdaten, die einer Werkstückbearbeitung zugeordnete Auftragsdaten angeben,

- Werkzeugdaten, die Informationen zu einem oder mehreren zugeordneten Werkzeugen angeben,
- Werkzeuglistendaten, die eine Liste von einem Bearbeitungsauftrag bzw. einer Werkstückbearbeitung zugeordneten Werkzeugen angeben,
- Spannmitteldaten, die Informationen zu einem oder mehreren zugeordneten Spannmitteln angeben, und/oder
- Spannmittellistendaten, die eine Liste von einem Bearbeitungsauftrag bzw. einer Werkstückbearbeitung zugeordneten Spannmitteln angeben.

In bevorzugten Ausführungsbeispielen ist die Datenverarbeitungseinrichtung dazu eingerichtet, vor Ausführen einer Bearbeitungsschrittsequenz zu überprüfen bzw. zu bestätigen, ob bzw. dass für jede den Bearbeitungsschritten jeweils zugeordnete Bearbeitungsschrittanwendung erforderliche Eingabedaten vorliegen, insbesondere durch erfolgte Eingabe des Bedieners, durch Vorliegen von ladbaren Eingabedaten und/oder durch Ausgabedaten einer vorher auszuführenden Bearbeitungsschrittanwendung.

Eine Steuervorrichtung zum Einsatz an einer numerisch gesteuerten Werkzeugmaschine mit einer Steuereinrichtung zum Steuern von Maschinenfunktionen der Werkzeugmaschine und einer mit der Steuereinrichtung verbundenen bzw. verbindbaren Bedienvorrichtung gemäß einem der vorstehenden Aspekte und/oder eine Werkzeugmaschine mit einer derartigen Steuervorrichtung.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

Fig. 1 zeigt eine schematische Darstellung eines Systems zum Bedienen und Steuern einer oder mehrerer numerisch gesteuerter Werkzeugmaschinen gemäß einem Ausführungsbeispiel der vorliegenden Erfindung.
Fig. 2 zeigt eine schematische Darstellung des Verfahrens gemäß einem Ausführungsbeispiel der vorliegenden Erfindung.
Fig. 3 zeigt schematisch die verschiedenen Abstraktionsebenen von der graphischen Oberfläche, die der Bediener sieht, über das Backend, weiter über die Vereinheitlichung der Datenstruktur, bis hin zu den Voreinsteilgeräten von einer Mehrzahl an unterschiedlichen Herstellern gemäß zumindest einem Ausführungsbeispiel der vorliegenden Erfindung.
Fig. 4 zeigt beispielhaft, den Austausch von Werkzeugdaten zwischen der Werkzeugmaschine WZM und dem Werkzeugvoreinstellgerät WV über das OPC UA-Protokoll gemäß zumindest einem Ausführungsbeispiel der vorliegenden Erfindung.
Fig. 5 zeigt beispielhaft den Werkzeugdatenaustausch als eine über OPC UA bereitgestellte Schnittstelle gemäß zumindest einem Ausführungsbeispiels der vorliegenden Erfindung.
Fig. 6 zeigt beispielhaft einen Auftragsauswahlbildschirm einer graphischen Benutzeroberfläche der Benutzerschnittstelle der Bedieneinrichtung der Werkzeugmaschine gemäß zumindest einem Ausführungsbeispiel der vorliegenden Erfindung.
Fig. 7 zeigt beispielhaft einen Werkzeugprüfbildschirm der graphischen Benutzeroberfläche der Benutzerschnittstelle der Bedieneinrichtung der Werkzeugmaschine gemäß zumindest einem Ausführungsbeispiel der vorliegenden Erfindung.
Fig. 8 zeigt beispielhaft einen Werkzeugladebildschirm der graphischen Benutzeroberfläche der Benutzerschnittstelle der Bedieneinrichtung der Werkzeugmaschine gemäß zumindest einem Ausführungsbeispiel der vorliegenden Erfindung.
Fig. 9 zeigt beispielhaft auszugsweise einen Teil der API-Spezifikationen für das Eingabeformat gemäß zumindest einem Ausführungsbeispiels der vorliegenden Erfindung.
Fig. 10 zeigt beispielhaft auszugsweise einen Teil der unterschiedlichen Spezifikationen für das Eingabeformat und den Herstellerformaten, die für die Ansteuerung der Werkzeugsteuerungen und der Voreinstellgeräte benötigt werden. Anhand der dargestellten Lookup-Tabelle können die Formate ineinander konvertiert werden gemäß zumindest einem Ausführungsbeispiels der vorliegenden Erfindung.

### Detaillierte Beschreibung der Figuren und bevorzuget Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Werkzeug- und Werkzeugdatenmanagement im Bereich der Werkzeugmaschinen stellen aktuell eine sehr große Herausforderung dar und insbesondere gibt es aktuell verschiedenste Wege wie Werkzeuge mit deren Daten zur Verwendung auf die Werkzeugmaschine gelangen. Werkzeugmaschinenseitig ist es dazu insbesondere meist notwendig, dass die Werkzeugdaten eingegeben werden um in der WZM-Steuerung verwendet werden zu können und daher ist meist auch ein bestimmtes Datenformat der Werkzeugdaten notwendig. Dieses wird meist von der WZM-Steuerung bestimmt. Weiterhin sind Voreinstellgeräte zur Einstellung oder Vermessung von Werkzeugen darauf ausgelegt über eine herstellerspezifische Nutzeroberfläche von einem menschlichen Bediener bedient zu werden. Die genauen Bedienschritte, die Bezeichnungen und die Darstellung der Daten unterscheiden sich dabei von Hersteller zu Hersteller. Entsprechende APIs stehen dabei nicht zur Verfügung. Aufgrund dieser vielfältigen Hürden stellt die Automatisierung bei der Werkzeugmaschinensteuerung in Bezug auf Werkzeugdaten aktuell ein zentrales Problem dar.

Mithin wird vorteilhaft vorgeschlagen, durch eine Werkzeugmanagementanwendung an der WZM-Steuerung (bspw. "Tool-Master") kombiniert mit einer speziellen Verarbeitung und Bereitstellung der Werkzeugdaten (z.B. "Tool-Data-Exchange") die Möglichkeit zu schaffen, das gesamte WZM-System direkt mit weiteren Datenmanagementsystemen zu verbinden, die außerhalb der Werkzeugmaschine existieren, sodass Werkzeugdaten, die bspw. in einem Werkzeugmessgerät vorhanden sind, erfasst werden können und über eine Identifizierung des Werkzeugs an der Maschine direkt in die WZM (bzw. WZM-Steuerung oder NC-Steuereinrichtung) geladen werden können, sodass der Arbeitsablauf und das Werkzeughandling gemeinsam und automatisiert über die Tool-Data-Exchange Anwendung der WZM-Steuerung abgehandelt werden können.

Besonders vorteilhaft wird dazu eine direkte Datenverbindung vorgeschlagen, d.h. dass die Daten direkt über eine Schnittstelle ausgetauscht werden können, aber die Werkzeugdaten können auch in einer Cloud vorhanden sein, sodass wenn man das Werkzeug an der WZM-Steuerung wählt, direkt Werkzeugdaten in die Maschine kommen und somit direkt in der WZM verfügbar sind.

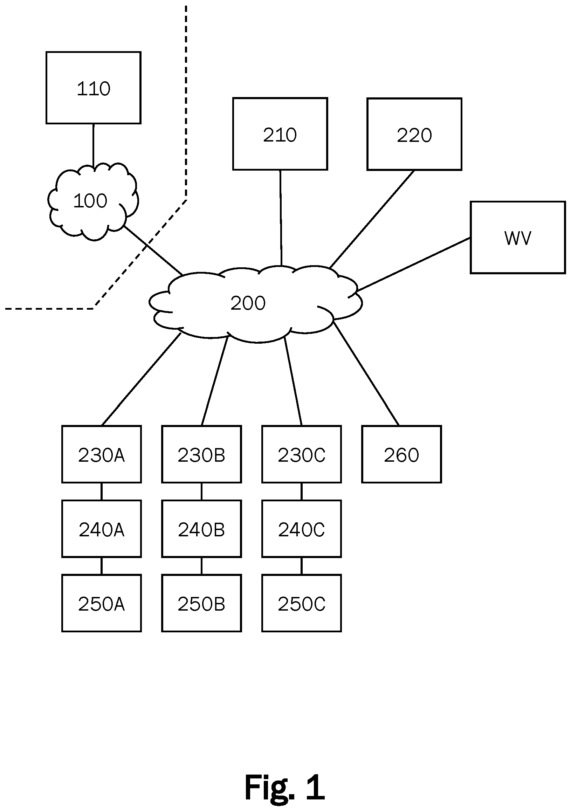

Zur Erläuterung des zugrundeliegenden Systemaufbaus, wird zunächst die Anordnung und Konnektivität der WZM in einem spezifischen Netzwerk beschrieben. Fig. 1 zeigt eine schematische, beispielhafte Darstellung eines Systems zum Bedienen und Steuern einer oder mehrerer numerisch gesteuerten Werkzeugmaschinen gemäß einem Ausführungsbeispiel der vorliegenden Erfindung.

Das System gemäß Fig. 1 umfasst beispielhaft einen Web-Server 110, der beispielhaft mit einem Kommunikationsnetzwerk 100, beispielhaft dem Internet, einem Cloud-Service-Netzwerk oder einem lokalen Netzwerk, verbunden ist.

Weiterhin umfasst das System gemäß Fig. 1 beispielhaft einen Datenbank-Server 210 und einen CAD/CAM-System-Server 220, die beispielhaft mit einem Kommunikationsnetzwerk 200, bevorzugt einem lokalen Netzwerk (z.B. LAN, WLAN, etc.), verbunden sind.

Beispielhaft ist das Kommunikationsnetzwerk 200 in Fig. 1 mit dem Kommunikationsnetzwerk 100 verbunden, wobei beispielhaft eine Firewall (gestrichelte Linie) zwischen dem Kommunikationsnetzwerk 100 und dem Kommunikationsnetzwerk 200 vorgesehen ist.

Das System gemäß Fig. 1 umfasst weiterhin beispielhaft eine numerisch gesteuerte Werkzeugmaschine 250A (z.B. eine Fräsmaschine, eine Universal-Fräsmaschine, ein Bearbeitungszentrum, eine Fräs-/Drehmaschine, eine Drehmaschine, ein Drehzentrum, eine Schleifmaschine, eine Verzahnungsmaschine, eine Auftragsmaschine für Additive Manufacturing, etc.) mit einer der Werkzeugmaschine 250A zugeordneten NC-Steuereinrichtung 240A, die mit der Werkzeugmaschine 250A bzw. bevorzugt mit steuerbaren Aktoren und Sensoren der Werkzeugmaschine 250A verbunden ist, und die dazu eingerichtet ist, die Werkzeugmaschine 250Abzw. Funktionen der Werkzeugmaschine 250Azu steuern. Die Steuereinrichtung 240A kann beispielhaft an der Werkzeugmaschine 250A integriert sein.

Weiterhin umfasst das System gemäß Fig. 1 beispielhaft eine der Werkzeugmaschine 250A zugeordnete Bedieneinrichtung 230A, die mit der der Werkzeugmaschine 250A zugeordneten Steuereinrichtung 240A verbunden ist. Die Bedieneinrichtung 230A ist zudem beispielhaft mit dem Kommunikationsnetzwerk 200 verbunden. Beispielhaft ist die Bedieneinrichtung 230A dazu eingerichtet, über das Kommunikationsnetzwerk 200 mit dem Datenbank-Server 210 und dem CAD/CAM-System-Server 220 zu kommunizieren.

Weiterhin ist die Bedieneinrichtung 230A beispielhaft dazu eingerichtet, über das Kommunikationsnetzwerk 200 und das Kommunikationsnetzwerk 100 mit dem Web-Server 110 zu kommunizieren.

Beispielhaft umfasst das System gemäß Fig. 1 zudem weitere numerisch gesteuerte Werkzeugmaschinen 250B und 250C jeweils mit entsprechend zugeordneten Steuereinrichtungen 240B und 240C sowie jeweils mit entsprechend zugeordneten Bedieneinrichtungen 230B und 230C.

Beispielhaft ist die Bedieneinrichtung 230A dazu eingerichtet, über das Kommunikationsnetzwerk 200 mit den Bedieneinrichtungen 230B und 230C der jeweiligen Werkzeugmaschinen 250B und 250C zu kommunizieren, und beispielhaft umgekehrt.

Weiterhin umfasst das System gemäß Fig. 1 beispielhaft eine separate Bedieneinrichtung 260 (z.B. ein Benutzercomputer, wie z.B. ein Laptop, Desktop-PC, Tablet, oder auch ein Smartphone), die mit dem Kommunikationsnetzwerk 200 verbunden ist.

Weiterhin umfasst das System gemäß Fig. 1 beispielhaft eine externe Vorrichtung WV, welche zur Bereitstellung und/oder Bestimmung von Werkzeugdaten geeignet ist, beispielhaft ein Voreinstell-, Wucht-, oder Schrumpfgerät. Dabei ist die externe Vorrichtung WV mit dem Kommunikationsnetzwerk 200 verbunden.

Die Bedieneinrichtung 230 kann mittels eines Computers (z.B. ein in einem Bedienpult der Werkzeugmaschine oder in der Werkzeugmaschine integrierter Front-End-PC) ausgebildet bzw. bereitgestellt sein.

Des Weiteren umfasst die Bedieneinrichtung 230 beispielhaft eine Benutzerschnittstelle 233, TM UI, bzw. ein Frontend und eine Netzwerkschnittstelle zur Herstellung einer kommunikativen Verbindung mit dem Netzwerk 200 bzw. mit dem Netzwerk 100.

Die TM UI bzw. das Frontend ist bevorzugt eine graphische Benutzerschnittstelle 233 (Graphical User Interface bzw. GUI) für den Bediener (z.B. umfassend Ausgabefunktionen über einen Bildschirm und Eingabefunktionen über Eingabegeräte, z.B. umfassend eine Maus, eine Tastatur, einen oder mehrere an dem Bildschirm implementierte Touch-Screens, Softkeys, Drehknöpfe, Drehregler, und/oder Tasten, usw., und ggf. Ausgabefunktionen über weitere Ausgabegeräte wie z.B. LED-Informationsfelder, Leuchten, Lampen, Warnlichter, Audioausgänge, usw.)

Hardwaretechnisch kann die Steuerungseinrichtung 240 in Ausführungsbeispielen z.B. an einem Computer ausgebildet sein, wie z.B. an dem gleichen Computer wie die Bedieneinrichtung 230. Alternativ kann die Steuerungseinrichtung 240 an einem eigenen Computer implementiert sein, z.B. an einem Back-End-PC der Werkzeugmaschine, der z.B. an der Werkzeugmaschine integriert sein kann.

Der Web-Server 110 ist beispielhaft dazu eingerichtet, web-basierte Daten bzw. web-basierte Anwendungen über das Netzwerk 100 bereitzustellen und bei Anfrage z.B. durch eine oder mehrere der Bedieneinrichtungen 230 bzw. 260 auszuführen und entsprechende Daten über die Netzwerke 100 und 200 an die anfragende Bedieneinrichtung 230 bzw. 260 zu übermitteln.

Beispielhaft kann die Bedieneinrichtung 260 als Computer ausgebildet sein, der sowohl eine Bedieneinrichtungssoftware analog zu der Bedieneinrichtungssoftware der Bedieneinrichtungen 230 umfasst als auch optional ein oder mehrere CAD/CAM-Softwareanwendungen.

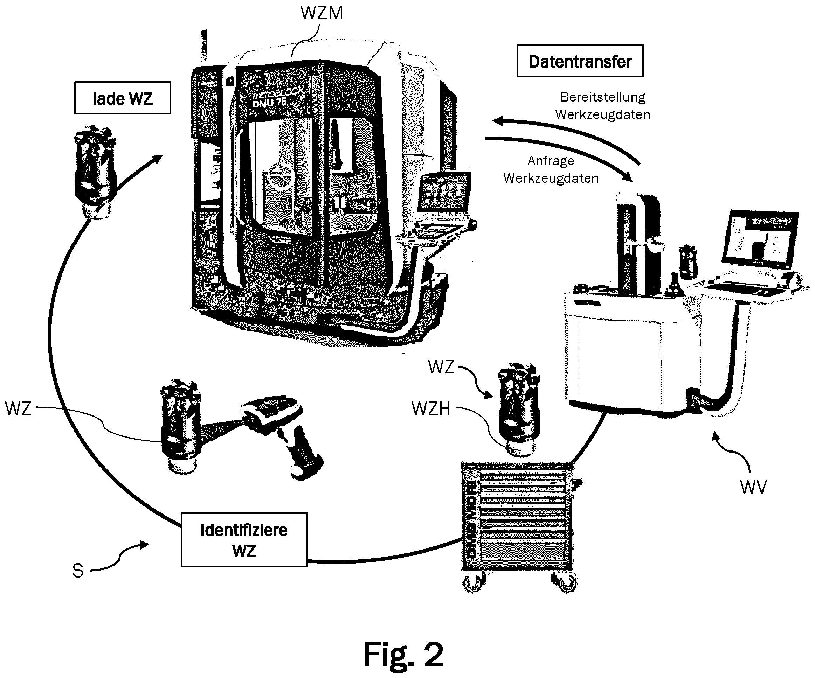

Fig. 2 zeigt eine schematische, beispielhafte Darstellung des Verfahrens zur Verarbeitung von Werkzeugdaten an einer Werkzeugmaschine WZM mit einer Datenschnittstelle zur Verbindung mit einem Werkzeugmanagementsystem. Zu den Verfahrensschritten zählen: Das Erfassen einer eindeutigen Werkzeugkennung, im Folgenden als "WID" bezeichnet, eines aufzunehmenden Werkzeugs WZ, und anschließend das Abgleichen der erfassten WID mit der Werkzeugmaschine WZM vorbekannten Werkzeugidentifikationsdaten. Wenn festgestellt wird, dass das aufzunehmende Werkzeug WZ der WZM noch nicht bekannt ist und/oder aktualisierte Werkzeugdaten zu der WID verfügbar sind, dann werden zunächst über die Datenschnittstelle Werkzeugdaten (oder aktualisierte Werkzeugdaten), basierend auf der erfassten WID, direkt vom Werkzeugmanagementsystem automatisiert abgerufen. Alternativ werden die Werkzeugdaten (oder aktualisierte Werkzeugdaten) direkt vom aufzunehmenden Werkzeug WZ automatisiert abgerufen. Im nächsten Schritt wird ein Beladeplatz für das aufzunehmende Werkzeug WZ, basierend auf den abgerufenen Werkzeugdaten festgelegt, und bevorzugt wird das Werkzeug WZ auch am festgelegten Beladeplatz aufgenommen.

Die Vereinheitlichung der gemessenen Werkzeugdaten findet bevorzugt durch ein einheitliches Eingabeformat statt, welches in die Herstellerformate aller unterstützten Hersteller konvertiert werden kann und umgekehrt. Dadurch können die Anfragen und Antworten an ein herstellerspezifisches Voreinstellgerät WV herstellerunabhängig abgebildet werden. Das Steuerprogramm zur Ansteuerung der Werkzeugmaschine kann dann im nächsten Schritt auf die Daten im vereinheitlichten Eingabeformat zurückgreifen. Insbesondere können so auch Werkzeugdaten, welche mit unterschiedlichen Voreinstellgeräten ausgemessen wurden, miteinander verglichen werden.

Die Werkzeughersteller, beispielhaft S1, S2, S3, stellen neben den eigentlichen Werkzeugen auch Voreinstellgeräte und Werkzeugsteuerungen zur Verfügung, mit denen bspw. Soll-Werte, Toleranzbereiche und Ist-Werte für die jeweiligen Werkzeuge festgestellt bzw. ausgeben werden können. Dabei sind diese Voreinstellgeräte darauf ausgelegt über eine herstellerspezifische Nutzeroberfläche von einem menschlichen Bediener bedient zu werden. Die genauen Bedienschritte, die Bezeichnungen und die Darstellung der Daten unterscheiden sich dabei von Hersteller zu Hersteller. Entsprechende APIs stehen dabei nicht zur Verfügung, lediglich ein M2M-Protokoll, wie z.B. MQTT, MTConnect, AMQP, und besonders vorteilhaft das generische OPC UA-Protokoll wird für eine computerimplementierte Ansteuerung unterstützt. Das OPC UA-Protokoll basiert auf hardwarenahen Low-Level Befehlen, sodass eine Ansteuerung über dieses Protokoll in der Praxis eine komplexe Aufgabe darstellt, welches daher auch besondere Qualifikation des Bedieners erfordert. Dies gilt insbesondere, wenn Geräte von fremden Herstellern mit proprietärer Hardware angesteuert werden. In der vorliegenden Ausführung stellt das vereinheitlichte Eingabeformat eine Lösung dieser komplexen Aufgabe dar.

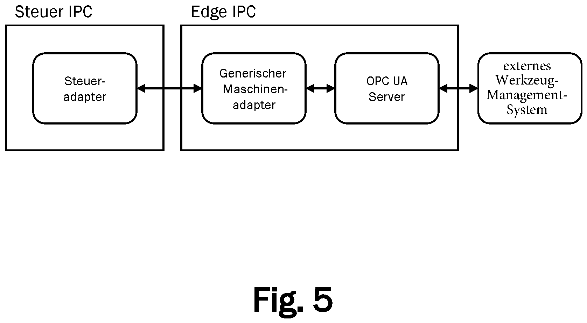

Der beispielhafte Datentransfer geschieht durch eine Netzwerkanfrage über eine Werkzeugdatenschnittstelle an das Werkzeugmanagementsystem, welches bevorzugt extern vorliegt und über die Netzwerkverbindung Daten aus der Cloud, beispielsweise dem Kommunikationsnetzwerk 100 und/oder Kommunikationsnetzwerk 200, zur Verfügung stellt. Das Werkzeugmanagementsystem stellt auf Anfrage Werkzeugdaten für die mit dem Kommunikationsnetzwerk 100 bzw. 200 verbundenen Geräte, wie bspw. der Werkzeugmaschine WZM bzw. den Werkzeugmaschinen 250A; 250B; 250C, den Bedieneinrichtungen 230A; 230B; 230C, den NC-Steuereinrichtungen 240A; 240B; 240C, oder dem Werkzeugvoreinstellgerät WV, bereit, siehe auch Fig. 1. Optional kann das Werkzeugmanagementsystem weitere Anfragen über das Kommunikationsnetzwerk 100 bzw. 200 bearbeiten, siehe auch Fig. 5.

Die Datenschnittstelle der Steuerungsvorrichtung 240 ist beispielhaft eine Werkzeugdatenschnittstelle, welche der UPC UA, Open Platform Communications Unified Architecture, entspricht, wobei die Schnittstelle einen OPC UA Server umfasst. Analog wird beispielhaft zur Kommunikation mit dem Werkzeugmanagementsystem und insbesondere zum Abrufen der Werkzeugdaten, die UPC UA verwendet. Des Weiteren werden die Werkzeugdaten beispielhaft über einen OPC UA Client als OPC UA Serviceaufruf von einem OPC UA Server abgerufen.

Bevorzugt werden die Werkzeugdaten nach dem Abrufen (werkzeugmaschinensteuerungsseitig) in ein Eingabeformat konvertiert, welches abhängig von der verwendeten Werkzeugmaschinensteuerung vorgegeben ist.

Beispielhaft wird beim Scannen S die WID erfasst, und eine Werkzeugidentifikationskennung des aufzunehmenden Werkzeugs WZ gescannt. Dazu umfasst die Werkzeugmaschine WZ bspw. ein Scangerät (integriert oder daran angeschlossen) zur Erfassung von Informationen, die so kodiert worden sind, dass sie insbesondere zur weiteren Datenverarbeitung auf zumindest einem digitalen Gerät geeignet sind. Bei der Kodierung kann es sich bspw. um Strichcodes, 2D-Codes, oder RFID-Chips handeln. Diese Art der Kodierung eignet sich besonders gut, wenn man die entsprechenden Informationen direkt an einem Werkzeug, insbesondere am Werkzeug WZ, anbringt und sie beispielsweise relevant sein können für das Management, das Handling, die Lokalisierung, die Identifizierung, und/oder die Beschreibung des Werkzeugs. Gemäß einem Anwendungsbeispiel können die Informationen direkt am Werkzeug, insbesondere am Werkzeug WZ, angebracht werden, indem sie bevorzugt per Laser eingraviert werden, oder alternativ wird ein Sticker bedruckt und entsprechend auf dem Werkzeug aufgeklebt. Optional ist diese Vorgehensweise auch für Werkstücke welche in die WZM eingewechselt werden möglich. Daten des Werkstücks können daher über den automatischen Abruf, nach dem Scannen einer ID des Werkstücks, automatisiert von einem Werkstückmanagementsystem (bspw. cloudbasiert) abgerufen werden.

Die Informationserfassung per Scangerät ist vorteilhaft gegenüber herkömmlichen Methoden bei denen die Informationserfassung durch menschliches Eingreifen, bspw. durch den Bediener der WZM, geschieht. Aus dem Stand der Technik sind herkömmliche Methoden bekannt, bei denen der Bediener manuell Informationen am Werkzeug ablesen muss und diese von Hand an der WZM-Steuerung eingeben muss. Dabei kann es zu Übertragungsfehler kommen, die durch automatisierte Verfahren, wie beim Scannen S, minimiert oder ausgeschlossen werden können. Darüber hinaus beansprucht die Informationserfassung per Scangerät weniger Zeit und ist somit insbesondere für zeitoptimiertes Arbeiten geeignet.

Die Werkzeugdaten umfassen Messwerte und/oder Einstellwerte des Werkzeugs WZ, welche an einer externen Vorrichtung, insbesondere am Werkzeugvoreinstellgerät WV, an einem Wucht- oder an einem Schrumpfgerät bestimmt wurden.

Zu den im Eingabeformat hinterlegten Daten zählen unter anderem die Werkzeugdaten. Die Werkzeugdaten umfassen die Messdaten des Voreinstellgeräts WV und möglicherweise weitere Daten zu Werkzeugeigenschaften, die nicht vom Voreinstellgerät WV erfasst werden. Zu den Messdaten können unter anderem:
- Länge
- Dicke
- Gewicht
- Toleranzbereich
- Anzahl der benötigten, freien Plätze im Werkzeugmagazin

zählen. Zu den weiteren Daten zu zusätzlichen Werkzeugeigenschaften können unter anderem:
   - Erwerbsdatum
   - Werkzeughistorie
   - Anzahl Nutzung
   - Letzter Auftrag in welchem dieses Werkzeug genutzt wurde
zählen.

Des Weiteren zählen zu den im Eingabeformat hinterlegten Daten unter anderem auch die WID. Die WID werden anhand einer eindeutigen ID, beispielsweise anhand einer Unique Device Identification (UDI), dargestellt. Zur Gewährleistung der Eindeutigkeit der ID im gesamten Geltungsbereich kann zur Vergabe der IDs ein zentraler Server, beispielsweise ein UDI Server, verwendet werden. Insbesondere wird im Falle der UDI ein globaler UDI-Server verwendet, der weltweit eindeutige IDs ausstellt, siehe auch Fig. -5.

Beispielhaft werden die vorbekannten Werkzeugidentifikationsdaten auf einem Speicher an der Werkzeugmaschine gespeichert, insbesondere einem internen Speicher der Werkzeugmaschine oder der Werkzeugmaschinensteuerung. Weiterhin können die WID und/oder Werkzeugdaten bespielhaft direkt am Werkzeug WZ oder am Werkzeughalter WZH maschinenlesbar angebracht sein, um durch Verfahrensschritt des Scannens S abgerufen zu werden. Insbesondere können die Werkzeugdaten und/oder die WID wie folgt maschinenlesbar angebracht werden:
- In einer Datenbank abspeichern (bspw. In der Cloud oder auf einem externen Server);
- Permanent auf dem Werkzeug WZ anbringen, insbesondere als gravierten oder gedruckten 2D-Code;
- Temporär auf dem Werkzeug WZ hinterlegen, insbesondere als bedruckten Aufkleber, wobei der Aufkleber bevorzugt mit einem 2D-Code bedruckt ist; und/oder
- Auf einem dem Werkzeug WZ zugeordneten (bspw. Am Werkzeug angebrachten) Datenträger, insbesondere einem RFID-Chip, abspeichern.

Bevorzugt werden die Daten physisch direkt am entsprechenden Werkzeug WZ angebracht. Dies bietet den Vorteil, dass man immer auf die Daten zugreifen kann, wenn man auf das Werkzeug WZ zugreifen kann. Besonders vorteilhaft sind Kodierungen, die speziell für das Einlesen durch digitale Geräte konzipiert wurden. Da zählen insbesondere optische Kodierungen wie 2D-Codes. Die vorliegende Erfindung unterstützt hierzu sowohl das Einlesen der DataMatrixCode-Kodierung als auch das Einlesen der QR-Code-Kodierung.

Eine alternative Variante zur Anbringung von Information direkt am Werkzeug WZ ist das Beschreiben von RFID-Chips, die direkt in das Werkzeug WZ integriert sind. Diese Variante ist vorteilhaft gegenüber einer Datenbank, da sie ähnlich wie 2D-Codes direkt am Werkzeug angebracht sind.

Die permanente Datenhinterlegung per Gravur durch einen Laser auf dem Werkzeug ist vorteilhaft gegenüber herkömmlichen Methoden bei denen die Informationsanbringung auf eine Weise am Werkzeug angebracht wird, die es ermöglicht, dass die entsprechenden Informationen vom Werkzeug getrennt werden können, oder dass die entsprechenden Informationen mit der Zeit oder durch zu erwartende äußere Einflüsse fehlerhaft werden. Im Vergleich zum beklebt mit einem Aufkleber werden, welcher mit relevanten Informationen beschriftet wird, kann die Gravur Vorteile haben. Die Klebefläche des Aufklebers kann mit der Zeit oder durch äußere Einflüsse seine Haftung verlieren, sodass der Aufkleber verloren geht und die relevanten Informationen nicht länger dem Werkzeug WZ zugeordnet werden können.

Ebenfalls kann das Material des Aufklebers bzw. das zur Beschriftung verwendete Farbmittel durch normales Arbeiten beschädigt werden, sodass die relevanten Informationen dem Werkzeug nur noch in Teilen oder falsch zugeordnet werden können.

Beispielhaft werden die Werkzeugdaten über eine direkte Datenverbindung abgerufen, sodass diese direkt in die Werkzeugmaschine WZM, oder WZ gelangen und dort zur Weiterverarbeitung direkt verfügbar sind, wobei bevorzugt die Werkzeugdaten nach dem Abrufen werkzeugmaschinenseitig gespeichert werden und bei der Abarbeitung eines Bearbeitungsauftrags verwendet werden.

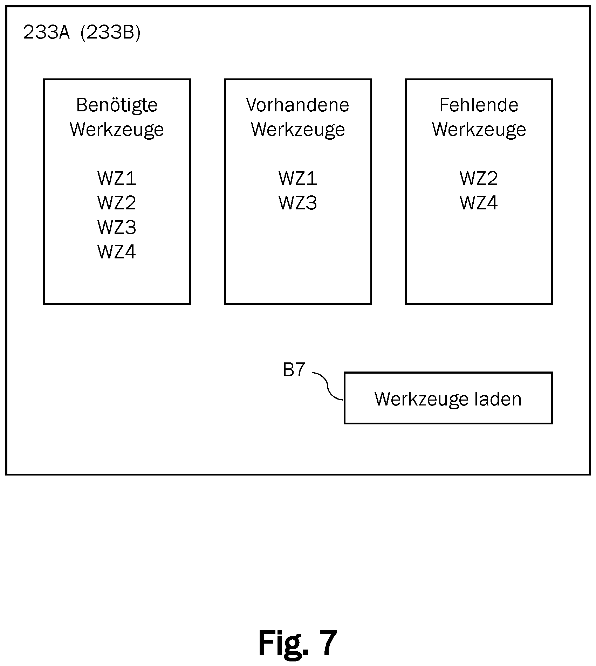

Beispielhaft wird ein NC-Programm nach benötigten Werkzeugen, beispielhaft WZ1, WZ2, WZ3, und WZ4, gescannt und bevorzugt wird eine Differenzliste erstellt. Die Differenzliste wird erstellt, indem die für einen Bearbeitungsauftrag benötigten Werkzeuge mit den bereits vorhandenen Werkzeugen, beispielhaft WZ1, und WZ2, verglichen werden. Anschließend werden ein oder mehrere einzuwechselnde Werkzeuge, beispielhaft WZ3, und WZ4, anhand der Differenzliste bestimmt. Für die bestimmten Werkzeuge, beispielhaft WZ3, und WZ4, wird ein vorbestimmter Rüstplatz zum Einwechseln festgelegt. Dabei wird eine Rüstreihenfolge der Werkzeuge in Abhängigkeit eines Bearbeitungsauftrags festlegt, sodass die Beladeplätze der Werkzeuge entsprechend dem Bearbeitungsauftrag festgelegt werden. Siehe auch Fig. 7.

Der erste Schritt des Beladevorgangs ist bspw. das Finden eines freien Platzes in der Werkzeugmaschine WZM, wobei die Werkzeugmaschine WZM beispielhaft ein Werkzeugmagazin umfasst, in welches das Werkzeug geladen werden kann. Dazu wird unter anderem anhand der im Eingabeformat hinterlegten Daten die beanspruchte Größe des zu beladenden Werkzeugs ermittelt. Anschließend wird ein entsprechend großer, und freier Platz gesucht. Falls kein solcher Platz in der Werkzeugmaschine WZM bzw. im Werkzeugmagazin gefunden wurde, dann wird eine Fehlernachricht ausgegeben, die das Problem erklärt. Andernfalls wird die Werkzeugmaschine WZM bzw. das Werkzeugmagazin in Stellung gebracht um die Beladung am entsprechend freien Platz zu ermöglichen.

Im nächsten Schritt wird die Werkzeugklappe der Werkzeugmaschine WZM bzw. des Werkzeugmagazins geöffnet und es werden Instruktionen dazu ausgeben wie die Werkzeugmaschine WZM bzw. das Werkzeugmagazin zu beladen ist. Die Beladung kann auch automatisiert ablaufen. Im automatisierten Verfahren wird nun gewartet bis die Werkzeugklappe wieder geschlossen wurde. An dieser Stelle muss das entsprechende Werkzeug in den freien Platz der Werkzeugmaschine WZM bzw. des Werkzeugmagazins geladen werden. Dies kann entweder manuell durch den Bediener geschehen oder automatisiert durch ein externes System. Durch Schließen der Werkzeugklappe wird signalisiert, dass das Werkzeug, beispielhaft WZ2, oder WZ4, beladen worden ist, und der Beladevorgang fortgesetzt werden kann.

Als letzten Schritt wird (optional) geprüft ob das Werkzeug ordnungsgemäß geladen worden ist. Falls die Prüfung negativ ausfällt, dann wird eine entsprechende Fehlernachricht ausgegeben, die das Problem erklärt. Falls die Prüfung andernfalls positiv ausfällt, dann gilt der Beladevorgang für dieses Werkzeug als abgeschlossen und der nächste Verfahrensschritt wird ausgeführt. Der nächste Verfahrensschritt ist beispielsweise entweder der Beladevorgang eines weiteren Werkzeugs oder die automatisierte Abarbeitung eines Bearbeitungsauftrags.

Falls die Differenzliste leer ist, wird der Bearbeitungsauftrag automatisch abgearbeitet. Andernfalls wird eines der fehlenden Werkzeuge auf der Differenzliste ausgewählt und dessen Werkzeugdaten und Identifikationsdaten im Eingabeformat abgerufen. Bevorzugt wird bei der Auswahl des zu rüstenden Werkzeugs aus der Differenzliste die festgelegte Rüstreihenfolge beibehalten. Anhand dieser Daten wird der Beladevorgang für das Werkzeug angestoßen. Nach erfolgreichem Abschluss des Beladevorgangs wird der Eintrag des beladenden Werkzeugs aus der Liste der fehlenden Werkzeuge gestrichen und stattdessen in die Liste der vorhandenen Werkzeuge hinzugefügt. Dieser Schritt wird solange wiederholt bis alle fehlenden Werkzeuge auf der Differenzliste geladen worden sind, und mit der Abarbeitung des Auftrags begonnen wird.

Zur automatischen Beladung kann das Computerprogrammprodukt direkt die Daten im Eingabeformat verwenden, da die Werkzeugdaten unter anderem alle zur Beladung notwendigen Informationen enthält, wie bspw. die Anzahl der zu belegenden Plätze im Werkzeugmagazin.

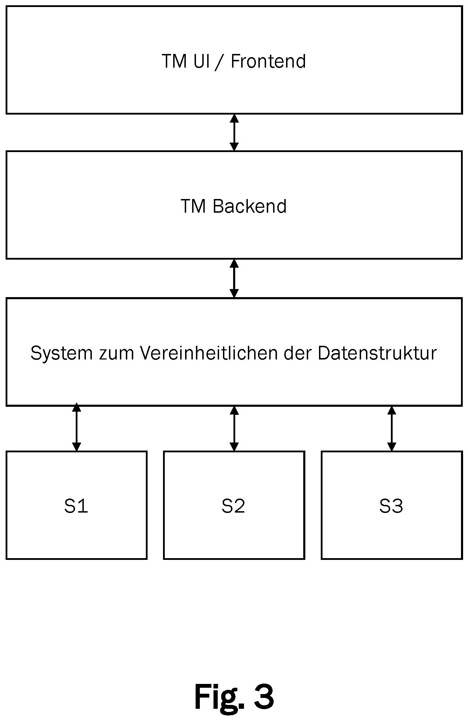

Fig. 3 zeigt schematisch die verschiedenen Abstraktionsebenen von der graphischen Benutzerschnittstelle 233, die der Bediener sieht, über das Backend, weiter über die Vereinheitlichung der Datenstruktur, bis hin zu den Voreinsteilgeräten von einer Mehrzahl an unterschiedlichen Herstellern, beispielhaft S1, S2, und S3, gemäß einem Ausführungsbeispiel der vorliegenden Erfindung.

Die TM UI bzw. das Frontend ist bevorzugt eine graphische Benutzerschnittstelle 233 (Graphical User Interface bzw. GUI) für den Bediener (z.B. umfassend ein Ausgabefunktionen über einen Bildschirm, mit zumindest einem Bildschirmbereich 233A, und Eingabefunktionen über Eingabegeräte, z.B. umfassend eine Maus, eine Tastatur, einen oder mehrere an dem Bildschirm implementierte Touch-Screens, Softkeys, Drehknöpfe, Drehregler, und/oder Tasten, usw., und ggf. Ausgabefunktionen über weitere Ausgabegeräte wie z.B. LED-Informationsfelder, Leuchten, Lampen, Warnlichter, Audioausgänge, usw.)

Das TM Backend entspricht bevorzugt dem Werkzeugmanagementsystem. Dabei ist das TM Frontend der Werkzeugmaschine über eine Datenschnittstelle mit dem Werkzeugmanagementsystem verbunden. Insbesondere können über die Datenschnittstelle Werkzeugdaten, basierend auf einer erfassten WID, direkt vom Werkzeugmanagementsystem automatisiert abgerufen werden. Die Daten liegen im Eingabeformat vor.

Das System zum Vereinheitlichen der Datenstruktur entspricht bevorzugt der Konvertierung von einer zumindest einem Herstellerformat oder vom OPC UA-Protokoll in das vereinheitlichende Eingabeformat bzw. der Konvertierung des vereinheitlichenden Eingabeformats in zumindest ein Herstellerformat oder in das OPC UA-Protokoll. Mit den Herstellergeräten S1; S2; und S3 kann in dem jeweiligem Herstellerformat oder über das OPC UA-Protokoll kommuniziert werden.

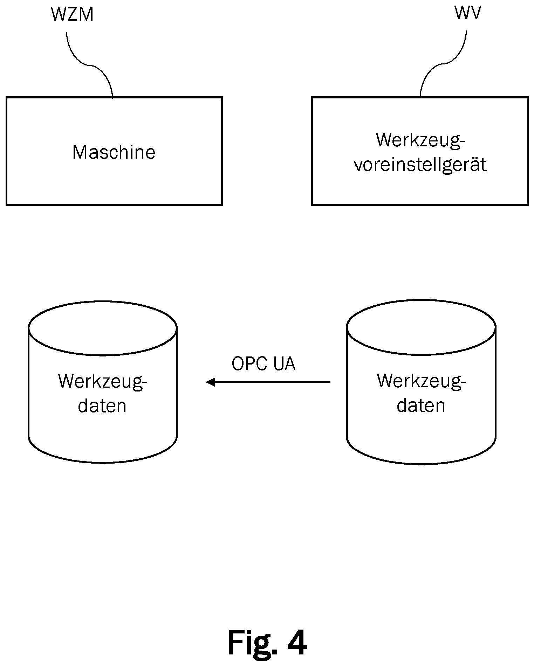

Fig. 4 zeigt eine beispielhaft schematisch, den Austausch von Werkzeugdaten zwischen der Werkzeugmaschine WZM und dem Werkzeugvoreinstellgerät WV über das OPC UA-Protokoll.

Werkzeugdaten liegen auf dem Werkzeugvoreinstellgerät WV und werden, beispielhaft über einen QR-Code, auf dem Werkzeughalter WZH eindeutig mit diesem identifiziert. Am Scanner wird das Werkzeug WZ während des Verfahrensschritts Scannen S gescannt und somit identifiziert. Daraufhin werden die Daten des Werkzeugs WZ über die OPC UA Schnittstelle von der Datenbank im Voreinstellgerät WV in die Werkzeugtabelle der Werkzeugmaschine geschrieben. Die zentrale Datenbank kann sich bespielhaft im Werkzeugvoreinstellgerät WV befinden.

Fig. -5 zeigt schematisch beispielhaft den Werkzeugdatenaustausch als eine über OPC UA bereitgestellte Schnittstelle. Insbesondere zeigt die Figur die Anbindung des -Control adapters als Teil des Control iPCs an das bevorzugt externe Werkzeugmanagementsystem. Die Anbindung geschieht über die Edge IPC, welche den Generic machine adapter und den OPC UA Server umfasst. Insgesamt bestehen Verbindungen zwischen dem Control adapter und dem Generic machine adapter, zwischen dem Generic machine adapter und dem OPC UA Server, und zwischen dem OPC UA Server und dem bevorzugt externen Werkzeugmanagementsystem. Insbesondere kann der Control adapter beispielhaft als PLC/NC Agent vorliegen, wobei der Generic machine adapter als Machine Communication X vorliegt. Alternativ beispielhaft kann der Control adapter beispielhaft als UDI Server vorliegen, wobei der Generic machine adapter als UDI Client vorliegt.

Liegt der Control adapter beispielhaft als UDI Server, und der Generic machine adapter als UDI Client vor, dann stellt der UDI Client bei Bedarf eine Anfrage an den UDI Server um eine eindeutige WID zu generieren, welche über den OPC UA Server dem Werkzeugmanagementsystem bereitgestellt wird. Der UDI Server stellt dabei sicher, dass die vergebenen WIDs tatsächlich global eindeutig sind.

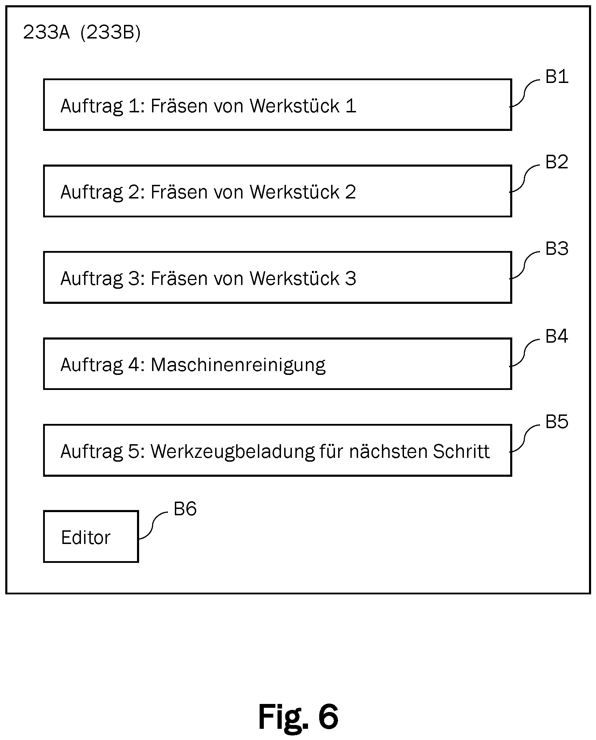

Fig. 6 zeigt beispielhaft schematisch einen Auftragsauswahlbildschirm der graphischen Benutzeroberfläche der Benutzerschnittstelle 233 der Bedieneinrichtung 230 der Werkzeugmaschine 250.

Beispielhaft sind die Auftragsauswahlelemente B1 bis B5 bereitgestellt, über die der Bediener die Aufträge 1 bis 5 auswählen kann. Bevorzugt kann die Anwahl der entsprechenden Aufträge an der Bedieneinrichtung 230 auftragsgemäß nur von Bedienern ausgewählt werden, die eine ausreichende Autorisation vorweisen. Dies kann z.B. durch unterschiedliche User-Rollen auf Grundlage der Befähigung bzw. Ausbildung des Bedieners erfolgen, z.B. mittels der User-Rollen: einfacher Maschinenbediener, erfahrener Maschinenbediener, Maschinenbelader, Einrichter, Maschinenprogrammierer, Maschineninstandhalter, Mehrmaschinenbediener, Werkzeugvoreinsteller, Arbeitsvorbereiter, Fabrikplaner, Prozessstandardisierer, etc.

Das Auswahlelement B6 ermöglicht beispielhaft das Starten einer Editor-Anwendung zum Ausführen des Bearbeitungsschrittsequenz-Editors an der graphischen Benutzeroberfläche der Benutzerschnittstelle 233 der Bedieneinrichtung 230 der Werkzeugmaschine 250. Die Editor-Anwendung ist dazu eingerichtet, die am Web-Server 110 bereitgestellten Bearbeitungsschrittanwendungen aufzulisten und auf Anwahl des Bedieners zu importieren. Der Bediener kann zudem die Reihenfolge der importierten Bearbeitungsschrittanwendungen festlegen bzw. definieren und vorgegebene Bearbeitungsschrittsequenzen speichern. Diese Editor-Funktionalität kann bevorzugt nur Bedienern mit einer speziellen Autorisation zur Verfügung gestellt werden.

Bevorzugt gibt der Editor für jede Bearbeitungsschrittanwendung an, welche Eingangsdaten bzw. Eingangsinformationen benötigt bzw. automatisiert abgerufen werden, welche Ausgangsdaten bzw. Ausgangsinformationen bereitgestellt werden und/oder welche Steuerfunktionen der Werkzeugmaschine aufgerufen werden.

In bevorzugten Ausführungsbeispielen kann bei Speichern einer editierten Bearbeitungsschrittsequenz eine automatische Plausibilitätsprüfung durchgeführt werden, bei der für jede Bearbeitungsschrittanwendung automatisiert überprüft wird, ob die erforderlichen Eingangsdaten zur Verfügung stehen (Datenverfügbarkeitsprüfung), entweder durch manuelle Eingabe am Editor, durch Bereitstellung als Ausgangsdaten einer in der vorgegebenen Sequenz vorhergehenden Bearbeitungsschrittanwendung, aus der Speichereinrichtung der Bedieneinrichtung, der Steuereinrichtung, aus PLC-Registern, oder durch Zugriff auf Datenbankdaten auf dem Datenbank-Server 210 und/oder den CAD-CAM-System-Server 220. Die benötigten Daten können auch Werkzeugdaten umfassen, und zwar die Werkzeugdaten Messwerte und/oder Einstellwerte des Werkzeugs, welche an einer externen Vorrichtung, insbesondere einem Voreinstell-, Wucht- oder Schrumpfgerät bestimmt wurden. Diese speziellen Daten sind insbesondere für den noch präziseren Einsatz des Werkzeugs an der Werkzeugmaschine vorteilhaft wobei die individuelle Bereitstellung der Daten über den automatisierten Datenabruf den besonderen Vorteil hat, dass aktuellste Messwerte und/oder Einstellwerte des tatsächlich einzuwechselnden Werkzeugs automatisch an der Werkzeugmaschine verfügbar sind und der Produktionsablauf effizient und präzise gestaltet werden kann.

Insbesondere wird die Datenverfügbarkeit bevorzugt nicht nur bei Speichern einer editierten bzw. erstellten Bearbeitungsschrittsequenz geprüft werden, sondern auch bei Verknüpfung eines neuen Auftrags mit einer Bearbeitungsschrittsequenz bzw. bei Start einer mit einem Auftrag verknüpften Bearbeitungsschrittsequenz bzw. optional bei auch noch bei (bzw. jeweils vor) Ausführen der entsprechenden Bearbeitungsschrittanwendungen.

Bei Ausführen einer vorgegebenen Bearbeitungsschrittsequenz durch den Bediener an der Bedieneinrichtung 230 kann bevorzugt nur jede Bearbeitungsschrittanwendung in der durch die gespeicherte oder importierte Bearbeitungsschrittsequenz vorgegebenen Reihenfolge aufgerufen und ausgeführt werden, und insbesondere kann keine Bearbeitungsschrittanwendung übersprungen werden. Besonders vorteilhaft werden die Werkzeugdaten erst abgerufen, wenn im nächsten Bearbeitungsschritt der Sequenz das Werkzeug tatsächlich im Bearbeitungsprozess benötigt wird. Die Werkzeugdaten werden daher nach dem just-in-time Prinzip erst zeitnah abgerufen was die Speicherbelastung und Rechenleistung der Steuerung entlasten kann. Optional können die Werkzeugdaten nach der letzten Verwendung im Bearbeitungsprozess auf der WZM-Steuerung wieder gelöscht werden und erst bei einem erneuten Einsatz des Werkzeugs wieder automatisch vom externen Werkzeugmanagementsystem bezogen werden.

Besonders vorteilhaft gibt die WZM dem externen Werkzeugmanagementsystem eine detaillierte Rückmeldung über den Einsatz (Dauer und Umfang der Nutzung sowie bspw. Arbeitstemperaturen, aufgebrachte Kräfte, Grenzwertüberschreitungen etc.) des (jedes) Werkzeugs, sodass die Werkzeughistorie im externen Werkzeugmanagementsystem stets aktuell ist und das Werkzeug auch beim Wechsel zu einer anderen WZM stets mit den aktuellsten Werkzeugdaten verknüpft ist.

Das Ausführen einer einem Auftrag zugeordneten vorgegebenen Bearbeitungsschrittsequenz durch den Bediener an der Bedieneinrichtung 230 wird durch den Bediener durch Anwahl eines der Auftragsauswahlelemente B1 bis B5, die einem jeweiligen Bearbeitungsauftrag zugeordnet sind, ausgelöst, zumindest insofern seine Autorisation dies erlaubt.

Bei Start einer jeweiligen Bearbeitungsschrittanwendung durch den Bediener kann ein neues Fenster der entsprechenden Bearbeitungsschrittanwendung geöffnet werden und eine Validitätsprüfung durchgeführt werden (z.B. inkl. Datenverfügbarkeitsprüfung). Zudem können der jeweiligen Bearbeitungsschrittanwendung zugeordnete Maschinenfunktionen ausgeführt werden.

Weiterhin kann in bevorzugten Ausführungsbeispielen an dem anderen Bildschirmbereich, bespielhaft der Bildschirmbereich 233B, der einen Control-Screen der Steuerungseinrichtung 240 zeigt, automatisch eine dem jeweiligen Bearbeitungsschritt zugeordnete Bildschirmdarstellung bzw. ein dem jeweiligen Bearbeitungsschritt zugeordnetes Steuerungsmenü aufgerufen werden. Dies kann über das TM UI bzw. das Frontend angefragt bzw. automatisch eingestellt werden.

Eine erste Bearbeitungsschrittanwendung (z.B. "Auftrag annehmen") kann dem Bediener die Auftragskopfdaten angeben, z.B. auf Basis der Auftragsdaten eines auszuführenden Auftrags, wobei die zugeordnete Auftragsdatei von dem Datenbank-Server 210 importiert wird.

Durch Bestätigung der Bearbeitungsschrittanwendung (z.B. "Auftrag annehmen") kann der Auftrag in den Status "Ausführung" gesetzt werden. Dies kann auch automatisch über das Netzwerk 200 an ein Produktionsüberwachungssystem gemeldet werden.

Eine weitere (optionale) Bearbeitungsschrittanwendung kann das Beladen von Werkzeugen bzw. die Überprüfung des Werkzeugbedarfs betreffen, siehe Fig. 7.

Die dem entsprechenden Werkstückbearbeitungsauftrag zugeordneten Auftragsdaten einer Auftrags-Datei (z.B. Auftragsdatenbank) können z.B. eine oder mehrere der folgenden Kopfdaten angeben: eine Bezeichnung des Arbeitsgangs, eine Auftrags-Identifikationsnummer, eine Auftragsbeschreibung, eine Werkstück-Identifikationsnummer, eine Werkstückbeschreibung, eine dem Auftrag zugeordnete Bestellungs-Identifikationsnummer, eine zugeordnete Kunden-Identifikationsnummer, eine Arbeitsplan-Identifikationsnummer, eine Angabe der gewünschten bzw. zu erzielenden Stückzahl (d.h. z.B. eine Anzahl der zu fertigenden Menge z.B. bei analoger Bearbeitung mehrerer Werkstücke hintereinander im gleichen Werkstückbearbeitungsauftrag), eine geplante Startzeit, eine geplante Endzeit, eine geplante bzw. errechnete Bearbeitungsdauer und ggf. optionale Informationen eines freien Textfelds. Derartige Daten können auch aus einem ERP- bzw. MES-System bereitgestellt werden.

Die Datenspeichereinrichtung des Datenbank-Servers 210 speichert optional beispielhaft eine Mehrzahl von Werkzeugdateien (z.B. Werkzeugdatenbank), wobei jede Werkzeugdatei Informationen zu einem zugeordneten Werkzeug bereitstellt bzw. angibt, wie z.B. eines oder mehrere aus: Werkzeugdimensionen (Größe, Durchmesser, Länge, Schneidentyp, Schneidenzahl etc.), Werkzeugtyp, Werkzeugidentifikationsnummer, usw.

Fig. 7 zeigt beispielhaft schematisch einen Werkzeugprüfbildschirm der graphischen Benutzeroberfläche der Benutzerschnittstelle 233 der Bedieneinrichtung 230 der Werkzeugmaschine 250.

Hierbei sind (z.B. auf Basis einer dem auszuführenden Auftrag zugeordneten Werkzeuglisten-Datei) die benötigten Werkzeuge, bespielhaft WZ1, WZ2, WZ3, und WZ4, angegeben. Zudem können auf Basis der an der Bedieneinrichtung vorliegenden Daten die an der Werkzeugmaschine WZ vorhanden Werkzeuge, bespielhaft WZ1, und WZ3, angezeigt werden und die demnach noch fehlenden bzw. noch zu ladenden Werkzeuge, beispielhaft WZ2, und WZ4.

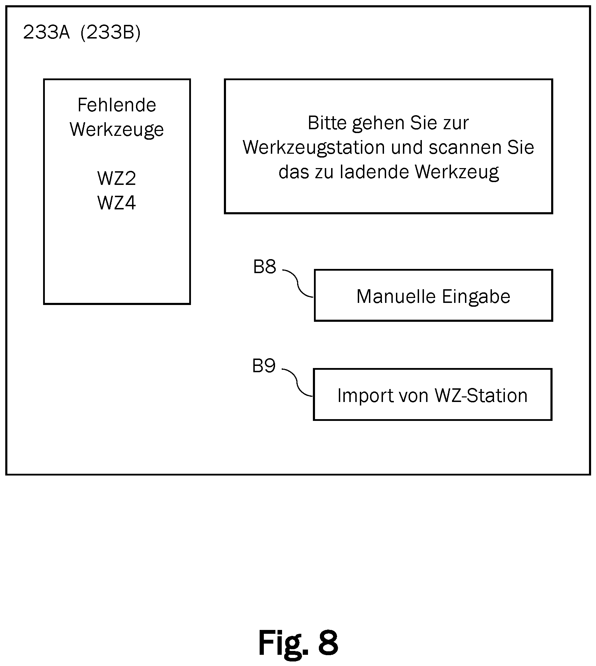

Durch Betätigung des Auswahlelements B7 "Werkzeuge laden" kann der Bediener zur Werkzeugbeladung übergehen, um ggf. die fehlenden Werkzeuge zu laden bzw. die dazugehörenden Werkzeugdaten eingeben (oder diese entweder aus den Werkzeugdaten importieren, falls bereits zuvor gescannt, oder von einem an dem Netzwerk 200 verbundenen Werkzeugvoreinstellgerät nach dem Scannen S des Werkzeugs importieren), siehe z.B. Fig. 8.

Fig. 8 zeigt beispielhaft schematisch einen Werkzeugladebildschirm der graphischen Benutzeroberfläche der Benutzerschnittstelle 233 der Bedieneinrichtung 230 der Werkzeugmaschine 250.

Durch Betätigung des Auswahlelements B8 "Manuelle Eingabe" kann der Bediener die fehlenden Werkzeuge vor dem Laden an der Werkzeugstation scannen und dann die Daten manuell eingeben oder diese durch Betätigen des Auswahlelements B9 "Import von WZ-Station" von einem an dem Netzwerk 200 verbundenen Werkzeugvoreinstellgerät importieren. Besonders vorteilhaft erfolgt die Eingabe der Daten wie beschreiben, automatisiert beim Scanvorgang beim Einwechseln des Werkzeugs insbesondere ohne Zutun des Bedieners.

Eine weitere (optionale) Bearbeitungsschrittanwendung kann das Laden bzw. Programmieren des NC-Codes betreffen. Dabei sind dem Auftrag zugeordnete NC-Dateien angegeben (z.B. auf Basis der Auftragsdaten einer zugeordneten Auftragsdatei) und diese können durch Betätigung eines entsprechenden Auswahlelements "NC-Datei in NC laden" an die Steuerungseinrichtung 240 exportiert werden (ggf. nach importieren der entsprechenden Datei(en) vom CAD/CAM-System-Server 220). Durch Auswahl des Auswahlelements B10 "NC-Datei editieren" kann der Bediener eine geladene Datei im beispielhaft darüber liegenden Anzeigefenster editieren (oder neu erstellen), zumindest falls die erforderliche Autorisation des Bedieners vorliegt.

Nach Werkzeugbeladung, ggf. Spannmitterüstung und NC-Code-Bereitstellung in Reihenfolge und Art gemäß der vorgegebenen Bearbeitungsschrittsequenz (und ggf. nach weiteren vorgegebenen Schritten), kann die Werkstückbearbeitung durchgeführt werden, ggf. in Verbindung mit vorgegebener Prozessüberwachung, darauffolgender Prozessdokumentation und ggf. optionaler Qualitätsprüfung, bis in einem letzten Bearbeitungsschritt der Auftrag automatisiert als Beendet bzw. Ausgeführt bestätigt werden kann.

Besonders vorteilhaft gibt die WZM dem externen Werkzeugmanagementsystem eine detaillierte Rückmeldung über den Einsatz (Dauer und Umfang der Nutzung sowie bspw. Arbeitstemperaturen, aufgebrachte Kräfte, Grenzwertüberschreitungen etc.) des (jedes) Werkzeugs, sodass die Werkzeughistorie im externen Werkzeugmanagementsystem stets aktuell ist und das Werkzeug auch beim Wechsel zu einer anderen WZM stets mit den aktuellsten Werkzeugdaten verknüpft ist.

Gemäß einem oder mehreren der vorstehenden Ausführungsbeispiele kann die Bedienung bzw. Steuerung einer Werkzeugmaschine erweitert und verbessert werden, insbesondere hinsichtlich der Bedienbarkeit bzw. der Automatisierung bzw. semi-automatisierten Unterstützung von Bearbeitungsschritten eines Werkstückbearbeitungsauftrags, ggf. auch durch teilweise ungeschulte bzw. wenig erfahrene Bediener.

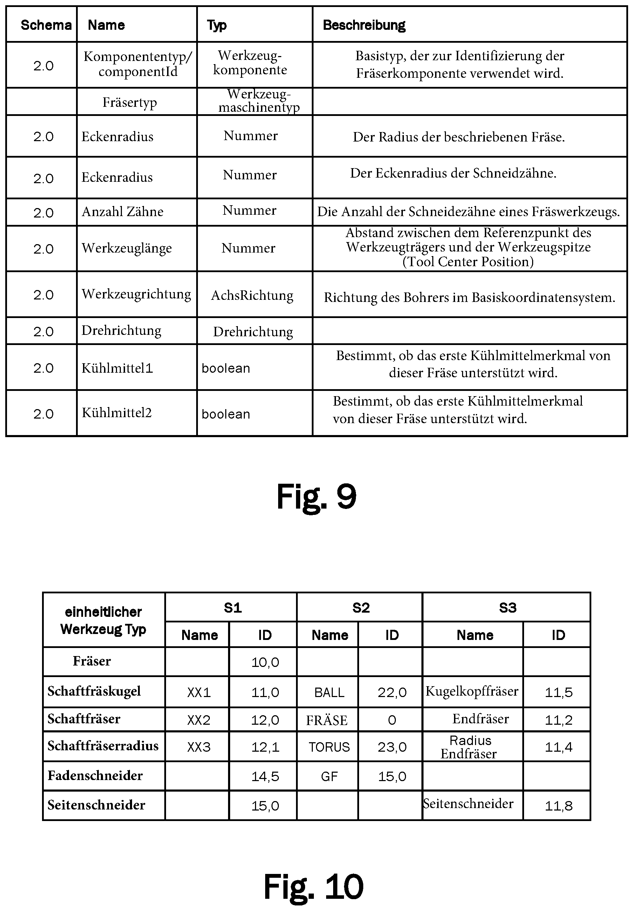

Fig. 9 zeigt beispielhaft auszugsweise einen Teil der API-Spezifikationen für das Eingabeformat. Das Eingabeformat liegt beispielhaft im JSON-Format vor.

Dabei stellt die Spalte "Schema" die Versionsnummer des Eingabeformats dar. Anhand des Feldes "Schema" ist es möglich verschiedene Versionen des Eingabeformats zu unterscheiden. Dies ist insbesondere vorteilhaft, da die API-Spezifikationen unterschiedlicher Versionen somit nicht miteinander kompatibel sein müssen.

Zudem stellt die Spalte "Name" den Namen anhand welchem ein Feld im Eingabeformat gelesen, angelegt, überschrieben, oder gelöscht werden kann.

Des Weiteren stellt die Spalte "Type" den Datentyp des Feldes im Eingabeformat dar. Der Datentyp legt die binäre Darstellung bzw. die menschen-lesbare Darstellung im Eingabeformat fest. Des Weiteren legt der Datentyp das Parsen zur Konvertierung des Feldes fest.

Abschließend stellt die Spalte "Description" eine Beschreibung dar, welche dem Bediener nützen kann um die Bedeutung eines Feldes im Eingabeformat zu interpretieren.

Fig. 10 zeigt beispielhaft auszugsweise einen Teil der unterschiedlichen Spezifikationen für das Eingabeformat und den Herstellerformaten, die für die Ansteuerung der Werkzeugsteuerungen und der Voreinstellgeräte benötigt werden. Anhand der dargestellten Lookup-Tabelle können die Formate ineinander konvertiert werden.

Dabei stellt die Spalte "uniform tool type" eine herstelleragnostische Werkzeugtypbezeichnung dar. Damit ist es möglich äquivalente Werkzeuge von verschiedenen Herstellern unter einem Begriff zusammenzufassen, und bei der Konvertierung zwischen verschiedenen Datenformaten die äquivalenten Felder einander zuzuordnen.

Weiterhin stellen die nächsten Spalten die Hersteller S1; S2; und S3 dar. Die jeweiligen Herstellerspalten sind weiter unterteilt in "name", die herstellereigene Bezeichnung des Werkzeugtyps, und "ID", einer herstellerübergreifenden ID. Der "name" ist jeweils für einen festen Hersteller eindeutig und wird vom Hersteller vergeben und wird im Herstellerformat genutzt. Die "ID" hingegen wird vom Eingabeformat festgelegt und es kann anhand der ID eindeutig der herstellereigene Bezeichner "name", der Hersteller S1; S2; oder S3, und die herstelleragnostische Werkzeugtypbezeichnung "uniform tool type" aufgelöst werden.

Zusammenfassend stellen Werkzeug- und Werkzeugdatenmanagement im Bereich der Werkzeugmaschinen aktuell eine sehr große Herausforderung dar und insbesondere gibt es aktuell verschiedenste Wege wie Werkzeuge mit Daten auf die Maschine kommen. Werkzeugmaschinenseitig ist es dazu insbesondere notwendig, dass die Werkzeugdaten eingegeben werden und in der Steuerung verwendet werden können und daher ein bestimmtes Datenformat vorliegt. Dazu sind verschiedene Datenformate relevant, wie bspw. CNC oder PLC.

Unter CNC versteht man eine numerische Steuerung, die einen oder mehrere Mikroprozessoren für die Ausführung der Steuerungsfunktionen umfasst. Äußeres Kennzeichen einer CNC sind meist ein Bildschirm und eine Tastatur. Die numerische Steuerung (CNC) wird mit einem CNC-Programm betrieben, das alle erforderlichen Funktionen umfasst, wie zum Beispiel Interpolation, Lage- und Geschwindigkeitsregelung. Mit Hilfe des einen oder der mehreren Mikroprozessoren und dem CNC-Programm wird ein werkstückabhängiges CNC-Teileprogramm ausgeführt, das in der Regel vom Benutzer der Maschine spezifiziert wird.

Ein CNC-Teileprogramm besteht aus einer beliebigen Anzahl von Sätzen, die den gesamten Arbeitsablauf der Maschine zur Bearbeitung eines Werkstücks schrittweise beschreiben. Jeder Satz im Programm repräsentiert einen geometrischen Bearbeitungsschritt und/oder eine bestimmte Maschinenfunktion. Ein Satz kann unterschiedliche Anweisungen enthalten. Man unterscheidet dabei
- geometrische Anweisungen, mit denen die Relativbewegungen zwischen Werkzeug und Werkstück gesteuert werden;
- technologische Anweisungen, mit denen Vorschubgeschwindigkeit, Spindeldrehzahl und Werkzeuge festgelegt werden;
- Fahranweisungen, die die Art der Bewegung bestimmen, wie zum Beispiel Eilgang, Linearinterpolation, Zirkularinterpolation und Ebenenauswahl;
- Schaltbefehle zur Auswahl der Werkzeuge, Schalttischstellungen, Kühlmittelzufuhr;
- Korrekturaufrufe, zum Beispiel für Werkzeuglängenkorrektur, Fräserdurchmesserkorrektur, Schneidenradiuskorrektur, und Nullpunktverschiebung; sowie
- Zyklen- und Unterprogrammaufrufe für häufig wiederkehrende Programmabschnitte.

Neben der numerischen Steuerung, dem CNC-Programm und dem CNC-Teileprogramm bedarf es zusätzlich eines Anpassprogramms (PLC-Programm) an die zu steuernde Maschine, das der Maschinenhersteller erstellt und in eine speicherprogrammierbare Anpasssteuerung (SPS = PLC (programmable logic controller)) integriert. Darin sind alle maschinenbezogenen Verknüpfungen und Verriegelungen für spezielle Funktionsabläufe festgelegt, wie zum Beispiel für Werkzeugwechsel, Werkstückwechsel und die Achsbegrenzungen

Zur weiteren Abgrenzung zwischen CNC und PLC sollen einige Unterschiede herausgestellt werden. Ein CNC-Teileprogramm für die Bearbeitung der Werkstücke wird vom Maschinenanwender erstellt. CNC-Teileprogramme können beliebig vom Anwender gewechselt oder modifiziert werden. Ein PLC-Programm hingegen wird vom Maschinenhersteller erstellt und unverlierbar gespeichert, zum Beispiel auf einem ROM (read only memory). Das PLC-Programm muss nur in Ausnahmefällen geändert oder getauscht werden. Insbesondere erfolgt bei der PLC keine Programmierung während des Betriebs. PLC-Programme müssen für jede PLC (speicherprogrammierbare Steuerung) erstellt werden und sind nicht für andere PLC-Fabrikate kompilierbar. Basierend auf diesem zentralen Unterschied ergibt sich, dass es pro Maschine bis zu mehrere tausend CNC-Teileprogramme geben kann. Die CNC-Teileprogramme erstellt der Maschinenanwender, feste Zyklen und Unterprogramme kann durchaus der Hersteller liefern. Für eine PLC gibt es in der Regel nur ein einziges festes, anlagenbezogenes Programm. Das Programm erstellt der Maschinenhersteller, meist unter Nutzung verfügbarer Funktionsbausteine.

Werkzeugmaschinen sind jeweils kundenindividuell ausgestattet. Daher ist es sehr aufwändig für den Service Techniker vorab die genau für diesen Kunden benötigten Softwareversionen herauszufinden und die passende Software für den jeweiligen Kunden herauszusuchen.

Es gibt verschiedene Hersteller von zentralen Komponenten innerhalb der Werkzeugmaschine, wie z.B. PLC und NC. Die Abhängigkeiten von Herstellern, Versionen, Updates und Sonderausstattungen müssen effizient gemanaged werden, damit sichergestellt ist, dass immer die zur Maschine passenden Software Updates Anwendung finden.

Mithin wird vorteilhaft vorgeschlagen, durch eine Werkzeugmanagementanwendung an der WZM-Steuerung (bspw. "Tool-Master") kombiniert mit einer speziellen Verarbeitung und Bereitstellung der Werkzeugdaten (z.B. "Tool-Data-Exchange") die Möglichkeit zu schaffen, das gesamte WZM-System direkt mit weiteren Datenmanagementsystemen zu verbinden, die außerhalb der Werkzeugmaschine existieren, sodass Werkzeugdaten, die bspw. in einem Werkzeugmessgerät vorhanden sind, erfasst werden können und über eine Identifizierung des Werkzeugs an der Maschine direkt in die WZM (bzw. WZM-Steuerung oder NC-Steuereinrichtung) geladen werden können, sodass der Arbeitsablauf und das Werkzeughandling gemeinsam und automatisiert über die Tool-Data-Exchange Anwendung der WZM-Steuerung abgehandelt werden können.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

### Bezugszeichenliste:

- 100:: Kommunikationsnetzwerk
- 110:: Web server
- 200:: Kommunikationsnetzwerk
- 210:: Datenbankserver
- 220:: CAD/CAM Systemserver
- 230:: Bedieneinrichtung
- 230A; 230B; 230C:: erste Bedieneinrichtung; zweite Bedieneinrichtung; dritte Bedieneinrichtung
- 233:: Benutzerschnittstelle
- 233A; 233B:: erster Bildschirmbereich, zweiter Bildschirmbereich
- 240:: Steuereinrichtung
- 240A; 240B; 240C:: erste NC-Steuereinrichtung; zweite NC-Steuereinrichtung; dritte NC-Steuereinrichtung
- 250A; 250B; 250C:: erste Werkzeugmaschine; zweite Werkzeugmaschine; dritte Werkzeugmaschine
- 260:: Separate Bedieneinrichtung
- B1, B2; B3; B4; B5:: Auswahlelement für Auftrag 1; Auftrag 2; Auftrag 3; Auftrag 4; Auftrag 5
- B6:: Auswahlelement für Editor-Anwendung
- B7:: Auswahlelement für Werkzeuge laden
- B8:: Auswahlelement für Manuelle Eingabe
- B9:: Auswahlelement für Import von WZ-Station
- S:: Scannen
- S1; S2; S3:: Werkzeugsteuerung eines ersten; zweiten; dritten Herstellers
- WV:: Voreinstellgerät
- WZ:: Werkzeug
- WZ1, WZ2; WZ3; WZ4:: Werkzeug 1; Werkzeug 2; Werkzeug 3; Werkzeug 4
- WZH:: Werkzeughalter
- WZM:: Werkzeugmaschine

## Patentansprüche

1. Verfahren zur Verarbeitung von Werkzeugdaten an einer Werkzeugmaschine mit einer Datenschnittstelle zur Verbindung mit einem Werkzeugmanagementsystem, wobei das Verfahren die Schritte umfasst:
Erfassen einer eindeutigen Werkzeugkennung, WID, eines aufzunehmenden Werkzeugs;
Abgleichen der erfassten WID mit vorbekannten Werkzeugidentifikationsdaten der Werkzeugmaschine;
wenn festgestellt wird, dass das aufzunehmende Werkzeug noch nicht bekannt ist und/oder aktualisierte Werkzeugdaten zu der WID verfügbar sind:
über die Datenschnittstelle, automatisiertes Abrufen von Werkzeugdaten direkt vom Werkzeugmanagementsystem, basierend auf der erfassten WID oder automatisiertes Abrufen der Werkzeugdaten direkt vom aufzunehmenden Werkzeug;
Festlegen eines Beladeplatzes für das aufzunehmende Werkzeug basierend auf den abgerufenen Werkzeugdaten und bevorzugt, Aufnahme des Werkzeugs am festgelegten Beladeplatz.

2. Verfahren nach Anspruch 1, wobei das Erfassen der WID, Scannen einer Werkzeugidentifikationskennung des aufzunehmenden Werkzeugs umfasst.

3. Verfahren nach zumindest einem der vorhergehenden Ansprüche, wobei das Werkzeugmanagementsystem ein externes Werkzeugmanagementsystem ist zum Bereitstellen von Daten aus der Cloud und die Datenschnittstelle eine Werkzeugdatenschnittstelle ist die über eine Netzwerkverbindung mit dem externen Werkzeugmanagementsystem in Verbindung steht.

4. Verfahren nach zumindest einem der vorhergehenden Ansprüche, wobei zur Erstellung einer Differenzliste die für einen Bearbeitungsauftrag benötigten Werkzeuge mit den bereits vorhandenen Werkzeugen verglichen werden und wobei ein oder mehrere einzuwechselnde Werkzeuge anhand der Differenzliste bestimmt werden.

5. Verfahren nach zumindest einem der vorhergehenden Ansprüche, wobei das Verfahren zunächst den Schritt umfasst, Scannen eines NC-Programms nach benötigten Werkzeugen und bevorzugt Erstellen einer entsprechenden Differenzliste.

6. Verfahren nach zumindest einem der vorhergehenden Ansprüche, wobei ein vorbestimmter Rüstplatz für das einzuwechselnde Werkzeug festgelegt wird.

7. Verfahren nach zumindest einem der vorhergehenden Ansprüche, wobei das Verfahren zudem in Abhängigkeit eines Bearbeitungsauftrags eine Rüstreihenfolge der Werkzeuge festlegt, sodass die Beladeplätze der Werkzeuge entsprechend dem Bearbeitungsauftrag festgelegt werden.

8. Verfahren nach zumindest einem der vorhergehenden Ansprüche, wobei die vorbekannten Werkzeugidentifikationsdaten auf einem Speicher an der Werkzeugmaschine gespeichert sind, insbesondere einem internen Speicher der Werkzeugmaschine oder der Werkzeugmaschinensteuerung.

9. Verfahren nach zumindest einem der vorhergehenden Ansprüche, wobei die WID und/oder Werkzeugdaten direkt am Werkzeug oder Werkzeughalter maschinenlesbar angebracht sind, um durch Scannen abgerufen zu werden.

10. Verfahren nach zumindest einem der vorhergehenden Ansprüche, wobei:
die Werkzeugdaten und/oder die WID in einer Datenbank abgespeichert werden; und/oder
die Werkzeugdaten und/oder die WID permanent auf dem Werkzeug angebracht sind, insbesondere als gravierter oder gedruckter 2D-Code; und/oder
die Werkzeugdaten und/oder die WID temporär auf dem Werkzeug hinterlegt werden, insbesondere als bedruckter Aufkleber; und/oder
die Werkzeugdaten und/oder die WID auf einem dem Werkzeug zugeordneten Datenträger, insbesondere einem RFID-Chip, abgespeichert sind; und/oder
der 2D-Code eine Data-Matrix-Code-Kodierung oder eine QR-Code-Kodierung ist.

11. Verfahren nach zumindest einem der vorhergehenden Ansprüche, wobei die Werkzeugdaten:
Messwerte und/oder Einstellwerte des Werkzeugs umfassen welche an einer externen Vorrichtung, insbesondere einem Voreinstell-, Wucht- oder Schrumpfgerät bestimmt wurden; und/oder
über eine direkte Datenverbindung abgerufen werden, sodass diese direkt in die Werkzeugmaschine gelangen und dort zur Weiterverarbeitung direkt verfügbar sind, wobei bevorzugt die Werkzeugdaten nach dem Abrufen werkzeugmaschinenseitig gespeichert werden und bei der Abarbeitung eines Bearbeitungsauftrags verwendet werden; und/oder
nach dem Abrufen in ein Eingabeformat konvertiert werden, welches abhängig von der verwendeten Werkzeugmaschinensteuerung vorgegeben ist.

12. Verfahren nach zumindest einem der vorhergehenden Ansprüche, wobei:
die Datenschnittstelle eine Werkzeugdatenschnittstelle ist welche der UPC UA, Open Platform Communications Unified Architecture, entspricht und wobei die Schnittstelle einen OPC UA Server umfasst; und/oder
zur Kommunikation mit dem Werkzeugmanagementsystem und insbesondere zum Abrufen der Werkzeugdaten, die UPC UA, Open Platform Communications Unified Architecture, verwendet wird; und/oder
über einen OPC UA Client die Werkzeugdaten als OPC UA Serviceaufruf von einem OPC UA Server abgerufen werden.

13. Computerprogrammprodukt, umfassend Befehle, die bei der Ausführung des Programms durch eine Steuerungseinrichtung einer numerisch gesteuerten Werkzeugmaschine diese veranlassen das Verfahren gemäß zumindest einer der vorherigen Ansprüche auszuführen.

14. Steuerungsvorrichtung für eine Werkzeugmaschine mit einer Datenschnittstelle zur Verbindung mit einem Werkzeugmanagementsystem und mit einem anwendungsbasierten Steuerungssystem, konfiguriert zum:
Erfassen einer eindeutigen Werkzeugkennung, WID, eines aufzunehmenden Werkzeugs;
Abgleichen der erfassten WID mit vorbekannten Werkzeugidentifikationsdaten der Werkzeugmaschine;
wenn festgestellt wird, dass das aufzunehmende Werkzeug noch nicht bekannt ist und/oder aktualisierte Werkzeugdaten zu der WID verfügbar sind:
über die Datenschnittstelle, automatisiertes Abrufen von Werkzeugdaten direkt vom Werkzeugmanagementsystem, basierend auf der erfassten WID oder automatisiertes Abrufen der Werkzeugdaten direkt vom aufzunehmenden Werkzeug;
Festlegen eines Beladeplatzes für das aufzunehmende Werkzeug basierend auf den abgerufenen Werkzeugdaten und bevorzugt, Aufnahme des Werkzeugs am festgelegten Beladeplatz.

15. Werkzeugmaschine mit einer Steuerungsvorrichtung nach Ansprüche 14.
